# EUROPEAN PATENT APPLICATION

(11) **EP 2 479 203 A1**
(43) Date of publication of application: **25.07.2012**
(21) Application number: 10817101.8
(22) Date of filing: 09.09.2010
(51) Int. Cl.: C08G 63/19, C08G 63/195, C08G 63/91

(54) **AROMATIC POLYESTER**

(30) Priority: 15.09.2009 JP 2009213757; 27.08.2010 JP 2010190798
(71) Applicant: Muroran Institute of Technology, Muroran-shi Hokkaido 050-8585 (JP); Nitta Corporation, Osaka-shi, Osaka 556-0022 (JP)
(72) Inventor: TABATA Masayoshi, Muroran-shi Hokkaido 050-8585 (JP); MAWATARI Yasuteru, Muroran-shi Hokkaido 050-8585 (JP); YAMAZAKI Takayoshi, Yamatokoriyama-shi Nara 639-1032 (JP)
(74) Representative: Uchida, Kenji
(86) International application number: PCT/JP2010/065535
(87) International publication number: WO 2011/033988

(57) **Abstract**

The present invention provides an aromatic polyester which is substantially free from the occurrence of coloration and retains significantly high transparency even after being thermally processed at high temperature and which has high flowability. The aromatic polyester contains a polyhydric phenol residue and a residue of any one of aromatic polycarboxylic acid, halide thereof, and anhydride thereof, and terminals of the aromatic polyester have a structure represented by the formula -C(O)-R. The aromatic polyester has an end-capping rate of 90% or higher and a weight average molecular weight (Mw) ranging from 3,000 to 1,000,000.

## Description

### Technical Field

The present invention relates to an aromatic polyester, and in particular relates to an aromatic polyester for optical applications.

### Background Art

Aromatic polyesters derived from polyhydric phenols, for example, bisphenol A, and aromatic polycarboxylic acids or halides thereof, or anhydrides thereof, for instance, isophthaloyl dichloride or terephthalic dichloride, usually have a high glass transition temperature and high heat resistance. The aromatic polyesters, however, generally have low melt flowability and thus need to be heated to 300°C or higher during processing such as injection molding. Accordingly, the molded product is colored slightly yellow unsuitable for optical applications such as optical fibers.

In order to prevent such coloration, attempts have been made to cap the polymer terminals of an aromatic polyester. For instance, in a traditional method of preparing a fully aromatic polyester carbonate by a polymerization reaction of aromatic dicarboxylic acid with aromatic diol and diaryl carbonate at a certain ratio, a predetermined compound selected from carbonates and carboxylic acid esters is added at a predetermined time during the polymerization reaction, thereby synthesizing end-capped fully aromatic polyester carbonate (Patent Literature 1). In this method, the carboxylic terminals and hydroxyl terminals of aromatic dicarboxylic acid and aromatic diol are partially capped through transesterification by melt polycondensation. The melt polycondensation involves a polymerization temperature in the range from 160 to 320°C at the initial stage of the polymerization and heating to a higher temperature in the range from 250 to 360 °C after addition of an end-capping agent. The resultant polymer is therefore inevitably colored, which is seriously problematic in optical application.

In order to prevent the degradation caused by coloration of an aromatic polyester, a method using an antioxidant is also known. For example, a method of preparing polyarylate is disclosed, in which an antioxidant is added in a certain amount in a process of preparing specific polyarylate by an interfacial polycondensation reaction of aromatic dicarboxylic halide with dihydric phenol having a biphenyl structure and a bisphenol structure (Patent Literature 2). The method has been relatively widely used as a secondary technique which enables an industrial material used for electronic components or other components to be prevented from the degradation due to the coloration. Unfortunately, the effect of preventing the degradation due to the coloration is not still sufficient for high optical demand characteristics.

A method of preparing an end-capped polyester having a specified molecular weight is disclosed, in which an aromatic polyhydric alcohol reacts with an aromatic polycarboxylic acid, or halide or anhydride thereof in the presence of a compound represented by Formula (II): X-C(O)-R (Patent Literature 3). In the formula, X represents chlorine, bromine, or iodine, and R represents a linear or branched alkyl group having 1 to 22 carbon atoms, an aryl group having 6 to 30 carbon atoms, an alkaryl or aralkyl group including the alkyl group and aryl group; at least one hydrogen atom of these groups is optionally substituted with fluorine, chlorine, bromine, iodine, an alkoxyl group, a mercapto group, a sulfenato group, a sulfinato group, a sulfo group, an alkoxycarbonyl group, an acyl group, an alkoxysulfinyl group, an alkylthiocarbonyl group, a thiosulfo group, a cyano group, a thiocyano group, an isocyano group, an isocyanato group, an isothiocyanato group, or a nitro group. R is preferably a phenyl group in which at least one hydrogen atom is substituted with fluorine, an alkyl group in which at least one hydrogen atom is substituted with fluorine, or a phenyl group in which at least one hydrogen atom is substituted with chlorine or an alkoxyl group. In Examples, fluorobenzoyl chloride, dodecanoyl chloride, chlorobenzoyl chloride, and methoxybenzoyl chloride are employed as the compound represented by the formula X-C(O)-R. Although the polyester prepared by the method has improved thermal resistance, the object of the disclosure is to prepare a polyester, which has a variable structure at terminals thereof as described above, having a variety of refractive indices. By virtue of this disclosure, an appropriate core material and clad material used for optical fibers can be produced.

Furthermore, a method of preparing polyarylate is disclosed which involves an interfacial polycondensation reaction of aromatic dicarboxylic halide with dihydric phenol, in which a specific quarternary ammonium salt is used as a catalyst in an amount ranging from 5 to 20 mol% relative to the dihydric phenol and monocarboxylic halide is added in an amount ranging from 3 to 10 mol% relative to dihydric phenol before the termination of the interfacial polycondensation (Patent Literature 4). The catalyst to be used is not a common material having three or more butyl groups, such as tributylbenzylammonium chloride or tetra-n-butylammonium bromide, but a quarternary ammonium salt having three or four ethyl groups. Examples of such quarternary ammonium salts include triethylbenzylammonium chloride, triethylbenzylammonium bromide, triethylbenzylammonium hydroxide, triethylbenzylammonium hydrogen sulfate, tetraethylammonium chloride, tetraethylammonium bromide, tetraethylammonium hydroxide, and tetraethylammonium hydrogen sulfate. The amount of the catalyst to be added is significantly large as compared with that of the traditional catalyst. This method, which involves use of a large amount of specific catalyst and addition of the monocarboxylic halide immediately before the termination of a single-step reaction, is aimed to reduce the residual monomers and oxides thereof in the resultant polyarylate as much as possible.

### Citation List

### Patent Literature

Patent Literature 1: Japanese Patent Application Laid-Open No. 2004-131598
Patent Literature 2: Japanese Patent Application Laid-Open No. 2008-214541
Patent Literature 3: Japanese Patent Application Laid-Open No. 2007-320989
Patent Literature 4: Japanese Patent Application Laid-Open No. 2006-176651

### Summary of the Invention

### Technical Problem

The present invention provides an aromatic polyester which is substantially free from the occurrence of coloration even after thermal processing at high temperature, retains significantly high transparency, almost does not exhibit birefringence, and has high flowability.

### Solution to Problem

The aromatic polyester prepared by the method disclosed in Patent Literature 3 has high thermal resistance and transparency and is substantially free from the occurrence of coloration even after processing at high temperature. Although the aromatic polyester is substantially free from the occurrence of coloration, requirements for optical applications are still not sufficiently satisfied. The inventors have been intensively studied to prepare an aromatic polyester which has higher transparency after being thermally processed. The inventors have found that the end-capping rate of an aromatic polyester with the compound represented by Formula (II) disclosed in Patent Literature 3, preferably benzoyl chloride, must be increased. In the case of simply increasing the additive amount of the compound represented by Formula (II) disclosed in Patent Literature 3, preferably benzoyl chloride, by a typical method of preparing an aromatic polyester, such as the method described in the example disclosed in Patent Literature 3, the end-capping rate of the aromatic polyester can be enhanced. In this case, however, the molecular weight of the resultant aromatic polyester has a tendency to decrease; hence, an aromatic polyester suitable for optical applications, for example use for optical fibers cannot be readily produced. An aromatic polyester having a predetermined molecular weight suitable for optical applications, for example, use for optical fibers, and highly end-capped with the compound represented by Formula (II) disclosed in Patent Literature 3, preferably benzoyl chloride, have not accordingly developed. The inventors have further intensively studied to prepare such an aromatic polyester. The inventors have finally found that the aromatic polyester described above can be prepared through multistep synthesis and then have accomplished the invention, the multistep synthesis including a first step of preparing an aromatic polyester having a relatively large molecular weight and a subsequent step of attaching the compound represented by Formula (II) disclosed in Patent Literature 3, preferably benzoyl chloride, to the hydroxyl terminals contained in the prepared polyester. In addition, a purification process is preferably employed between the first and second steps in the present invention, thereby purifying the aromatic polyester prepared in the first step. This process can remove a relatively low-molecular-weight aromatic polyester contained in the aromatic polyester prepared in the first step, and the end-capping rate of the resultant aromatic polyester can be accordingly enhanced.

The present invention provides:
(1) An aromatic polyester containing a polyhydric phenol residue and a residue of any one of aromatic polycarboxylic acid, halide thereof, and anhydride thereof, wherein terminals of the aromatic polyester have a structure represented by Formula (I):

   - C (O) - R (I)
wherein R represents any one of an aliphatic group, an alicyclic group, a monocyclic aromatic group, a polycyclic aromatic group, a fused aromatic group, a heterocyclic group, and a combination of these groups, at least one hydrogen atom of these groups being optionally substituted with any one of fluorine, chlorine, bromine, iodine, an alkoxyl group, a mercapto group, a sulfenato group, a sulfinato group, a sulfo group, an alkoxycarbonyl group, an acyl group, an alkoxysulfinyl group, an alkylthiocarbonyl group, a thiosulfo group, a cyano group, a thiocyano group, an isocyano group, an isocyanato group, an isothiocyanato group, and a nitro group, the end-capping rate of polyester is at least 90*%*, and the aromatic polyester has a weight average molecular weight (Mw) of 3,000 to 1,000,000.

Preferred aspects include:
(2) The aromatic polyester according to Aspect (1), wherein the end-capping rate of polyester is at least 92*%*;
(3) The aromatic polyester according to Aspect (1), wherein the end-capping rate of polyester is at least 95*%*;
(4) The aromatic polyester according to Aspect (1), wherein the end-capping rate of polyester is at least 99*%*;
(5) The aromatic polyester according to any one of Aspects (1) to (4), wherein R in Formula (I) represents any one of a monocyclic aromatic group, a polycyclic aromatic group, a fused aromatic group, and a heterocyclic group, at least one hydrogen atom of these groups being optionally substituted with any one of fluorine, chlorine, bromine, iodine, and an alkoxyl group;
(6) The aromatic polyester according to any one of Aspects (1) to (4), wherein R in Formula (I) represents any one of a phenyl group, a naphthyl group, an anthranyl group, and a phenanthryl group, at least one hydrogen atom of these groups being optionally substituted with any one of fluorine, chlorine, and a methoxyl group;
(7) The aromatic polyester according to any one of Aspects (1) to (4), wherein R in Formula (I) represents a phenyl group or a naphthyl group, at least one hydrogen atom of the group being optionally substituted with any one of fluorine, chlorine, and a methoxyl group;
(8) The aromatic polyester according to any one of Aspects (1) to (4), wherein R in Formula (I) represents a phenyl group or a naphthyl group;
(9) The aromatic polyester according to any one of Aspects (1) to (4), wherein R in Formula (I) represents a phenyl group;
(10) The aromatic polyester according to any one of Aspects (1) to (9), wherein the polyester has a weight average molecular weight (Mw) of 3,000 to 1,000,000;
(11) The aromatic polyester according to any one of Aspects (1) to (9), wherein the polyester has a weight average molecular weight (Mw) of 5,000 to 500,000;
(12) The aromatic polyester according to any one of Aspects (1) to (9), wherein the polyester has a weight average molecular weight (Mw) of 20,000 to 250,000;
(13) The aromatic polyester according to any one of Aspects (1) to (9), wherein the polyester has a weight average molecular weight (Mw) of 20,000 to 100,000;
(14) The aromatic polyester according to any one of Aspects (1) to (9), wherein the polyester has a weight average molecular weight (Mw) of 20,000 to 80,000;
(15) The aromatic polyester according to any one of Aspects (1) to (9), wherein the polyester has a weight average molecular weight (Mw) of 25,000 to 80,000;
(16) The aromatic polyester according to any one of Aspects (1) to (9), wherein the polyester has a weight average molecular weight (Mw) of 25,000 to 60,000;
(17) The aromatic polyester according to any one of Aspects (1) to (16), wherein a melt flow rate (MFR, unit: g/10min, and measurement conditions: 320°C and a load of 10.0 kg) is at least 15.0;
(18) The aromatic polyester according to any one of Aspects (1) to (16), wherein a melt flow rate (MFR, unit: g/10min, and measurement conditions: 320°C and a load of 10.0 kg) is at least 30.0;
(19) The aromatic polyester according to any one of Aspects (1) to (16), wherein a melt flow rate (MFR, unit: g/10min, and measurement conditions: 320°C and a load of 10.0 kg) is at least 50.0;
(20) The aromatic polyester according to any one of Aspects (1) to (16), wherein a melt flow rate (MFR, unit: g/10min, and measurement conditions: 320°C and a load of 10.0 kg) is at least 60.0;
(21) The aromatic polyester according to any one of Aspects (1) to (20), wherein the polyhydric phenol is bisphenol A, and any one of the aromatic polycarboxylic acid, halide thereof, and anhydride thereof is terephthaloyl dichloride and/or isophthaloyl dichloride;
(22) The aromatic polyester according to any one of Aspects (1) to (21), the aromatic polyester is used for optical applications; and
(23) The aromatic polyester according to any one of Aspects (1) to (21), the aromatic polyester is used for an optical fiber.

The present invention also provides:
(24) A method of preparing an aromatic polyester by a reaction of polyhydric phenol with any one of aromatic polycarboxylic acid, halide thereof, and anhydride thereof, the method including:
   (i) step of adding a compound represented by Formula (II):

      X - C (O) - R (II)

      wherein, X represents any one of chlorine, bromine, and iodine, and R represents any one of an aliphatic group, an alicyclic group, a monocyclic aromatic group, a polycyclic aromatic group, a fused aromatic group, a heterocyclic group, and a combination thereof, at least one hydrogen atom of these groups being optionally substituted with any one of fluorine, chlorine, bromine, iodine, an alkoxyl group, a mercapto group, a sulfenato group, a sulfinato group, a sulfo group, an alkoxycarbonyl group, an acyl group, an alkoxysulfinyl group, an alkylthiocarbonyl group, a thiosulfo group, a cyano group, a thiocyano group, an isocyano group, an isocyanato group, an isothiocyanato group, and a nitro group,
      in an amount of 0 to 40 mol% relative to the total fed amount of any one of the aromatic polycarboxylic acid, halide thereof, and anhydride thereof to promote a reaction, and
   (ii) step of adding the compound represented by Formula (II) in an amount of 3 to 80 mol% relative to the total fed amount of any one of the aromatic polycarboxylic acid, halide thereof, and anhydride thereof in step (i) to further promote the reaction of the resultant aromatic polyester.

Preferred aspects include:
(25) The method of preparing an aromatic polyester according to Aspect (24), wherein the compound represented by Formula (II) is added in an amount of 0 to 20 mol% in step (i);
(26) The method of preparing an aromatic polyester according to Aspect (24), wherein the compound represented by Formula (II) is added in an amount of 0 to 15 mol% in step (i);
(27) The method of preparing an aromatic polyester according to Aspect (24), wherein the compound represented by Formula (II) is added in an amount higher than 0 mol*%* and up to 40 mol*%* in step (i);
(28) The method of preparing an aromatic polyester according to Aspect (24), wherein the compound represented by Formula (II) is added in an amount higher than 0 mol*%* and up to 30 mol*%* in step (i);
(29) The method of preparing an aromatic polyester according to Aspect (24), wherein the compound represented by Formula (II) is added in an amount higher than 0 mol*%* and up to 20 mol*%* in step (i);
(30) The method of preparing an aromatic polyester according to Aspect (24), wherein the compound represented by Formula (II) is added in an amount higher than 0 mol*%* and up to 15 mol*%* in step (i);
(31) The method of preparing an aromatic polyester according to any one of Aspects (24) to (30), wherein the compound represented by Formula (II) is added in an amount of 3 to 50 mol*%* in step (ii);
(32) The method of preparing an aromatic polyester according to any one of Aspects (24) to (30), wherein the compound represented by Formula (II) is added in an amount of 3 to 35 mol*%* in step (ii);
(33) The method of preparing an aromatic polyester according to any one of Aspects (24) to (30), wherein the compound represented by Formula (II) is added in an amount of 3 to 20 mol*%* in step (ii);
(34) The method of preparing an aromatic polyester according to any one of Aspects (24) to (33), wherein R in Formula (II) represents any one of a monocyclic aromatic group, a polycyclic aromatic group, a fused aromatic group, and a heterocyclic group, at least one hydrogen atom of these groups being optionally substituted with any one of fluorine, chlorine, bromine, iodine, and an alkoxyl group;
(35) The method of preparing an aromatic polyester according to any one of Aspects (24) to (33), wherein R in Formula (II) represents any one of a phenyl group, a naphthyl group, an anthranyl group, and a phenanthryl group, at least one hydrogen atom of these groups being optionally substituted with any one of fluorine, chlorine, and a methoxyl group;
(36) The method of preparing an aromatic polyester according to any one of Aspects (24) to (33), wherein R in Formula (II) represents any one of a phenyl group and a naphthyl group, at least one hydrogen atom of these groups being optionally substituted with any one of fluorine, chlorine, and a methoxyl group;
(37) The method of preparing an aromatic polyester according to any one of Aspects (24) to (33), wherein R in Formula (II) represents any one of a phenyl group and a naphthyl group;
(38) The method of preparing an aromatic polyester according to any one of Aspects (24) to (33), wherein R in Formula (II) represents a phenyl group;
(39) The method of preparing an aromatic polyester according to any one of Aspects (24) to (38), wherein X in Formula (II) represents chlorine;
(40) The method of preparing an aromatic polyester according to any one of Aspects (24) to (39), further including step (iii) of purifying a solution produced through the reaction in step (i), step (iii) being performed between steps (i) and (ii);
(41) The method of preparing an aromatic polyester according to Aspect (40), wherein the purification in step (iii) involves separating a solution containing the aromatic polyester from the solution produced through the reaction, and the separated solution is used in the reaction in step (ii);
(42) The method of preparing an aromatic polyester according to Aspect (40), wherein the purification in step (iii) involves washing the solution produced through the reaction, and the resulting solution containing the aromatic polyester is used in the reaction in step (ii);
(43) The method of preparing an aromatic polyester according to Aspect (42), wherein water is used for the washing of the solution produced through the reaction;
(44) The method of preparing an aromatic polyester according to Aspect (40), wherein the purification in step (iii) involves separating the aromatic polyester from the solution produced through the reaction, and the separated product is used in the reaction in step (ii);
(45) The method of preparing an aromatic polyester according to Aspect (40), wherein the purification in step (iii) involves preparing a solution containing the aromatic polyester from the solution produced through the reaction and then separating the aromatic polyester from the resultant solution, and the separated aromatic polyester is used in the reaction in step (ii);
(46) The method of preparing an aromatic polyester according to Aspect (40), wherein the purification in step (iii) involves washing the solution produced through the reaction and separating the aromatic polyester from the resultant solution containing the aromatic polyester, and the separated aromatic polyester is used in the reaction in step (ii);
(47) The method of preparing an aromatic polyester according to Aspect (46), wherein water is used for the washing of the solution produced through the reaction; and
(48) The method of preparing an aromatic polyester according to any one of Aspects (24) to (47), wherein the polyhydric phenol is bisphenol A, and any one of the aromatic polycarboxylic acid, the halide thereof, and anhydride thereof is terephthaloyl dichloride and/or isophthaloyl dichloride.

### Advantageous Effects of the Invention

The aromatic polyester of the invention has significantly high transparency and substantially free from the occurrence of coloration even after being thermally processed at high temperature. In addition, the polyester has high flowability. The aromatic polyester of the invention is remarkably useful for optical applications such as optical fibers.

### Brief Description of the Drawings

Fig. 1 is an NMR spectrum of an aromatic polyester end-capped with benzoyl chloride (Example 1);
Fig. 2 is an NMR spectrum of an aromatic polyester end-capped with benzoyl chloride (Comparative Example 2);
Fig. 3 is an NMR spectrum of an aromatic polyester end-capped with benzoyl chloride (Comparative Example 2);
Fig. 4 is an NMR spectrum of an aromatic polyester end-capped with benzoyl chloride (Example 1);
Fig. 5 is an NMR spectrum of an aromatic polyester end-capped with benzoyl chloride (Example 5);
Fig. 6 is an NMR spectrum of an aromatic polyester end-capped with 1-naphthoyl chloride (Example 10); and
Fig. 7 is an NMR spectrum of a compound produced as a result of capping two hydroxyl groups at the both ends of 2,2-bis(4-hydroxyphenyl)propane[bisphenol A] with 1-naphthoyl chloride.

### Description of the Embodiments

The aromatic polyester of the present invention, at terminals thereof, has a structure represented by Formula (I):

- C (O) - R (I)

wherein, R represents any one of an aliphatic group, an alicyclic group, a monocyclic aromatic group, a polycyclic aromatic group, a fused aromatic group, a heterocyclic group, and a combination thereof, at least one hydrogen atom of these groups being optionally substituted with any one of fluorine, chlorine, bromine, iodine, alkoxyl group, a mercapto group, a sulfenato group, a sulfinato group, a sulfo group, an alkoxycarbonyl group, an acyl group, an alkoxysulfinyl group, an alkylthiocarbonyl group, a thiosulfo group, a cyano group, a thiocyano group, an isocyano group, an isocyanato group, an isothiocyanato group, and a nitro group. In a preferred structure represented by Formula (I), R represents a monocyclic aromatic group, a polycyclic aromatic group, a fused aromatic group, or a heterocyclic group, at least one hydrogen atom of these groups being optionally substituted with fluorine, chlorine, bromine, iodine, or an alkoxyl group. In a more preferred structure, R represents a phenyl group, a naphthyl group, an anthranyl group, or a phenanthryl group, at least one hydrogen atom of these groups being optionally substituted with fluorine, chlorine, or a methoxyl group. In a further preferred structure, R represents a phenyl group or a naphthyl group, at least one hydrogen atom of these groups being optionally substituted with fluorine, chlorine, or a methoxyl group. In an even further preferred structure, R represents a phenyl group or a naphthyl group. In an especially preferred structure, R represents a phenyl group (namely, a benzoyloxy group). A higher end-capping rate of the polyester is more preferred. The end-capping rate is 90*%* or higher, preferably 92*%* or higher, more preferably 95*%* or higher, and further preferably 99*%* or higher. At an end-capping rate of the polyester below the lower limit of the above ranges, the coloration caused by processing at high temperature cannot be sufficiently prevented. Throughout the specification, the end-capping rate of the polyester means a percentage of the number of structures represented by Formula (I) to the sum of the number of polyhydric phenol residues at the terminals of the aromatic polyester and the number of structures represented by Formula (I). Methods of measuring and calculating the end-capping rate will be mentioned later in Examples in detail.

The lower limit of the weight average molecular weight (Mw) of the aromatic polyester of the present invention is 3,000, preferably 5,000, more preferably 10,000, further preferably 20,000, and even further preferably 25,000. The upper limit of the weight average molecular weight is 1,000,000, preferably 500,000, more preferably 250,000, further preferably 100,000, even further preferably 80,000, and especially preferably 60,000. At a weight average molecular weight below the lower limit, the aromatic polyester is unsuitable for optical applications.

The lower limit of the melt flow rate (MFR, unit: g/10min, measured at 320°C and a load of 10.0 kg) of the aromatic polyester of the present invention is preferably 15.0, more preferably 30.0, further preferably 50.0, and even further preferably 60.0. A higher melt flow rate is preferred since it enhances the moldability of the aromatic polyester. Thus, the upper limit is not specifically defined. A melt flow rate below the lower limit is undesirable since it causes poor moldability of the aromatic polyester.

The aromatic polyester which contains the polyhydric phenol residue and the residue of aromatic polycarboxylic acid, halide thereof, or anhydride thereof and has the structure represented by Formula (I) can be prepared through the reaction of the polyhydric phenol with the aromatic polycarboxylic acid, halide thereof, or anhydride thereof and the compound represented by Formula (II). The polyhydric phenol, and the aromatic polycarboxylic acid, halide thereof, and anhydride thereof are known.

The aromatic polyester of the present invention is synthesized by a method of preparing an aromatic polyester by a reaction of a polyhydric phenol with any one of aromatic polycarboxylic acid, halide thereof, and anhydride thereof, the method including:
(i) step of adding a compound represented by Formula (II):

   X -C (O) - R (II)

   wherein, X represents chlorine, bromine, or iodine, and R represents an aliphatic group, an alicyclic group, an monocyclic aromatic group, a polycyclic aromatic group, a fused aromatic group, a heterocyclic group, or a combination thereof, at least one hydrogen atom of these groups being optionally substituted with fluorine, chlorine, bromine, iodine, an alkoxyl group, a mercapto group, a sulfenato group, a sulfinato group, a sulfo group, an alkoxycarbonyl group, an acyl group, an alkoxysulfinyl group, an alkylthiocarbonyl group, a thiosulfo group, a cyano group, a thiocyano group, an isocyano group, an isocyanato group, an isothiocyanato group, or a nitro group,
   in an amount of 0 to 40 mol% relative to the total fed amount of the aromatic polycarboxylic acid, halide thereof, or anhydride thereof to promote the reaction, and
(ii) step of adding the compound represented by Formula (II) in an amount of 3 to 80 mol*%* relative to the total fed amount of any one of the aromatic polycarboxylic acid, halide thereof, and anhydride thereof in step (i) to further promote the reaction of the resultant aromatic polyester. In a preferred compound represented by Formula (II), R represents a monocyclic aromatic group, a polycyclic aromatic group, a fused aromatic group, or a heterocyclic group, at least one hydrogen atom of these groups being optionally substituted with fluorine, chlorine, bromine, iodine, or an alkoxyl group. In a more preferred compound, R represents a phenyl group, a naphthyl group, an anthranyl group, or a phenanthryl group, at least one hydrogen atom of these groups being optionally substituted with fluorine, chlorine, or a methoxyl group. In a further preferred compound, R represents a phenyl group or a naphthyl group, at least one hydrogen atom of these groups being optionally substituted with fluorine, chlorine, or a methoxyl group. In an even further preferred compound, R represents a phenyl group or naphthyl group. In an especially preferred compound, R represents a phenyl group. X preferably represents chlorine. Preferred compounds represented by Formula (II) are benzoyl chloride and naphthoyl chloride, and particularly preferred is benzoyl chloride.

The upper limit of the amount of the compound represented by Formula (II) used in step (i) is 40 mol*%*, preferably 30 mol*%*, more preferably 20 mol*%*, and further preferably 15 mol*%* relative to the total fed amount of the aromatic polycarboxylic acid, halide thereof, or anhydride thereof. The lower limit of the amount is 0 mol*%*, preferably greater than 0 mol*%*, and more preferably 4 mol*%*. An amount exceeding the upper limit leads to a decrease in the weight average molecular weight of the produced aromatic polyester, and thus the end product of the aromatic polyester is not suitable for optical applications. The upper limit of the amount of the compound represented by Formula (II) used in step (ii) is 80 mol*%*, preferably 50 mol*%*, more preferably 35 mol*%,* and further preferably 20 mol*%* relative to the total fed amount of the aromatic polycarboxylic acid, halide thereof, or anhydride thereof in step (i). The lower limit of the amount is 3 mol*%*, preferably 5 mol*%*, more preferably 7 mol*%*, and further preferably 10 mol*%*. In an amount below the lower limit, hydroxyl groups remain at some terminals of the produced aromatic polyester, and coloration may occur as a result of high-temperature processing. Since the compound represented by Formula (II) is taken into terminals of the aromatic polyester in a substantially constant amount even though the amount exceeds the upper limit, the coloration after high-temperature processing cannot sufficiently be prevented with the increased amount of the compound.

Step (i) for synthesizing the aromatic polyester of the present invention may be conducted under known conditions. A reaction temperature is preferably in the range from 5 to 60°C, more preferably in the range from 10 to 50°C, and further preferably in the range from 20 to 30°C. The reaction time is preferably in the range from 10 to 180 minutes, more preferably in the range from 20 to 120 minutes, and further preferably in the range from 30 to 90 minutes. The reaction pressure is preferably in the range from 0.01 to 2 MPa and more preferably in the range from 0.08 to 0.12 MPa. The preparation may be performed either by a batch or continuous process. The same conditions as used in step (i) are also employed in step (ii). In step (ii), the total amount of the compound represented by Formula (II) may be fed at one time or may be gradually added to promote the reaction. In step (i) for preparing the aromatic polyester of the present invention, the polyhydric phenol is fed preferably in an amount of at least 1.0 mol, more preferably in the range from 1.0 to 5.0 mol, and further preferably in the range from 1.1 to 3.0 mol relative to 1.0 mol of the aromatic polycarboxylic acid, halide thereof, or anhydride thereof.

In steps (i) and (ii), any known catalyst may be added in an amount typically employed. Examples of the catalysts include quaternary ammonium salts represented by the following formula. In steps (i) and (ii), the amount of the catalyst to be added is preferably in the range from 0 to 10 mol*%*, more preferably in the range from 0.001 to 5 mol*%*, and further preferably in the range from 0.005 to 1 mol*%* relative to the amount of the polyhydric phenol fed in step (i).

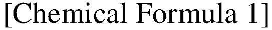

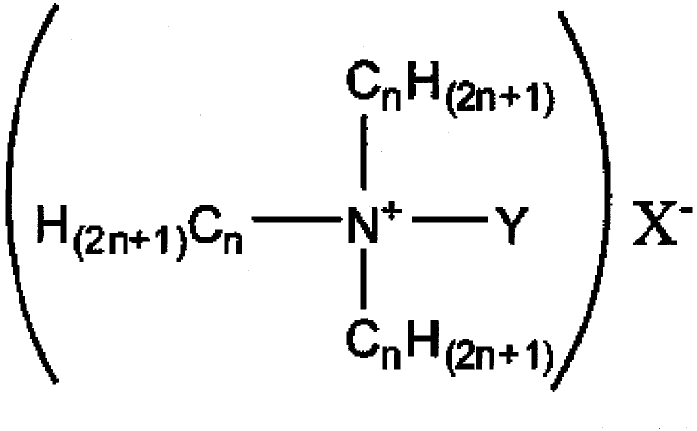

In the Formula, Y represents H, an ethyl group, a buthyl group, or a benzyl group, X represents Cl, Br, I, OH, or HSO₄, and n is an integer from one to eight, preferably three to eight. Examples of the quaternary ammonium salt include tetrabutylammonium fluoride, tetrabutylammonium fluoride hydrate, tetraethylammonium fluoride hydrate, tetraethylammonium fluoride tetrahydrofluoride, tetraethylammonium fluoride trihydrofluoride, tetrabutylammonium chloride, tetrapropylammonium chloride, tetrapentylammonium chloride, acetylchlorine chloride, (3-acrylamidopropyl)trimethylammonium chloride, benzalkonium chloride, benzoylchlorine chloride, benzylcetyldimethylammonium chloride hydrate, N-benzylcinchonidium chloride, benzyldimethylphenylammonium chloride, benzyldimethylstearylammonium chloride, benzyldimethyltetradecylammonium chloride, N-benzylquinidinium chloride, N-benzylquininium chloride, benzyltributylammonium chloride, benzyltriethylammonium chloride, benzyltrimethylammonium chloride, carbamylchlorine chloride, chlorocholine chloride, (3-chloro-2-hydroxypropyl)triethylammonium chloride, choline chloride, n-decyltrimethylammonium chloride, diallyldimethylammonium chloride, dichloromethylenedimethylammonium chloride, dimethyldistearylammonium chloride, dodecyltrimethylammonium chloride, n-hexadecyltrimethylammonium chloride, hexamethionium chloride dihydrate, lauroylchlorine chloride, metacholine chloride, methacroylcholine chloride, (2-methoxyethoxymethyl)triethylammonium chloride, β-methylcholine chloride, methyltriethylammonium chloride, n-octyltrimethylammonium chloride, phenyltrimethylammonium chloride, phenyltriethylammonium chloride, phosphochorine chloride calcium salt, phosphochorine chloride sodium salt, stachydrine hydrochloride, succinic chlorine chloride, tetra-n-amylammonium chloride, tetra-n-butylammonium chloride, tetradecyldimethylbenzylammonium chloride, tetraethylammonium chloride, tetramethylammonium chloride, trimethyl[2,3-(dioleyloxy)propyl]ammonium chloride, trimethylstearylammonium chloride, trimethyltetradecylammonium chloride, trimethyl[3-(triethoxysilyl)propyl]ammonium chloride, tri-n-octylmethylammonium chloride, trioxymethylammonium chloride, tetrapropylammonium bromide, tetrapentylammonium bromide, acetylchlorine bromide, benzoylchlorine bromide, benzyltri-n-butylammonium bromide, benzyltriethylammonium bromide, benzyltrimethylammonium bromide, bromocholine bromide, cetyldimethylethylammonium bromide, choline bromide, decamethonium bromide, decyltrimethylammonium bromide, didecyldimethylammonium bromide, dilauryldimethylammonium bromide, dimethyldimyristylammonium bromide, dimethyldioctylammonium bromide, dimethyldipalmitylammonium bromide, dimethyldistearylammonium bromide, dodecyltrimethylammonium bromide, (ferrocenylmethyl)dodecyldimethylammonium bromide, (ferrocenylmethyl)trimethylammonium bromide, hexadecyltrimethylammonium bromide, hexamethonium bromide, hexyldimethyloctylammonium bromide, hexyltrimethylammonium bromide, metacholine bromide, neostigmine bromide, n-octyltrimethylammonium bromide, phenyltrimethylammonium bromide, stearyltrimethylammonium bromide, tetraamylammonium bromide, tetra-n-butylammonium bromide, tetra-n-decylammonium bromide, tetradecyltrimethylammonium bromide, tetraethylammonium bromide, tetraheptylammonium bromide, tetrahexylammonium bromide, tetramethylammonium bromide, tetra-n-propylammonium bromide, tetra-n-propylammonium bromide, 3-(trifluoromethyl)phenyltrimethylammonium bromide, trimethylvinylammonium bromide, valethamate ammonium bromide, acetylcholine iodide, acetylthiocholine iodide, benzoylcholine iodide, benzoylthiocholine iodide, benzoyltriethylammonium iodide, butyrylcholine iodide, butyrylthiocholine iodide, decamethinium iodide, N,N-dimethylmethyleneammonium iodide, 1,1-dimethyl-4-phenylpiperazinium iodide, ethyltrimethylammonium iodide, ethyltri-n-propylammonium iodide, (ferrocenylmethyl)trimethylammonium iodide, (2-hydroxyethyl)triethylammonium iodide, β-methylcholine iodide, O-β-naphthyloxycarbonyl choline iodide, phenyltriethylammonium iodide, tetra-n-amylammonium iodide, tetrabutylammonium iodide, tetraethylammonium iodide, tetraheptylammonium iodide, tetra-n-hexylammonium iodide, tetramethylammonium iodide, tetra-n-octylammonium iodide, tetra-n-propylammonium iodide, 3-(trifluoromethyl)phenyltrimethylammonium iodide, trimethylphenylammonium iodide, benzyltriethylammonium hydroxide, benzyltrimethylammonium hydroxide, choline, n-hexadecyltrimethylammonium hydroxide, hexadecyltrimethylammonium hydroxide, phenyltrimethylammonium hydroxide, tetrabutylammonium hydroxide, tetraethylammonium hydroxide, tetrahexylammonium hydroxide, tetramethylammonium hydroxide, tetrapropylammonium hydroxide, 3-(trifluoromethyl)phenyltrimethylammonium hydroxide, tris(2-hydroxyethyl)methylammonium hydroxide, acetylcholine perchlorate, benzyltrimethylammonium dichloroiodate, benzyltrimethylammonium tetrachloroiodate, benzyltrimethylammonium tribromide, betaine anhydrous, betaine hydrochloride, bis(tetra-n-butylammonium)dichromate, bis(tetra-n-butylammonium)tetracyanodiphenoquinodimethanide, 1-butyl-1-methylpyrrolidinium bis(trifluoromethylsulfonyl)imide, L-carnitine, 3-[(3-cholamidopropyl)dimethylammonium]-1-propanesulfonate, cyclophenyl trimethyl ammonium(trifluoromethanesulfonyl)imide, denatonium benzoate, n-dodecyldimethyl(3-sulfopropyl)ammonium hydroxide inner salt, N-fluoro-N'-(chloromethyl)triethylenediamine bis(tetrafluoroborate), hexadecyltrimethylammonium hexafluorophosphate, hexadecyltrimethylammonium perchlorate, hexadecyltrimethylammonium tetrafluoroborate, (methoxycarbonylsulfamoyl)triethylammonium hydroxide inner salt, methyltri-n-octylammonium bis(trifluoromethanesulfonyl)imide, methyltri-n-octylammonium hydrogen sulfate, neostigmine methylsulfate, octadecyldimethyl(3-sulfopropyl)ammonium hydroxide inner salt, phenyltrimethylammonium tribromide, proponylchlorine p-toluene sulfonate, tetrabutylammonium azide, tetrabutylammonium bifluoride, tetrabutylammonium borohydride, tetrabutylammonium bromodiiodide, tetrabutylammonium dibromoaurate, tetrabutylammonium dibromochloride, tetrabutylammonium dibromoiodide, tetrabutylammonium dichloroaurate, tetrabutylammonium dichlorobromide, tetrabutylammonium difluorotriphenylsilicate, tetrabutylammonium difluorotriphenylstannate, tetrabutylammonium dihydrogen trifluoride, tetrabutylammonium diiodoaurate, tetrabutylammonium hexafluorophosphate, tetrabutylammonium hydrogen sulfate, tetrabutylammonium perchlorate, tetrabutylammonium perrhenate, tetrabutylammonium phosphate, tetrabutylammonium salicylate, tetrabutylammonium tetrafluoroborate, tetrabutylammonium tetraphenylborate, tetrabutylammonium thiocyanate, tetrabutylammonium tribromide, tetrabutylammonium trifluoromethanesulfonate, tetrabutylammonium triiodide, tetraethylammonium borohydride, tetraethylammonium perchlorate, tetraethylammonium tetrafluoroborate, tetraethylammonium p-toluenesulfonate, tetraethylammonium trifluoromethanesulfonate, tetramethylammonium acetate, tetramethylammonium borohydride, tetramethylammonium hexafluorophosphate, tetramethylammonium hydrogensulfate, tetramethylammonium perchlorate, tetramethylammonium sulfate, tetramethylammonium tetrafluoroborate, tetramethylammonium p-toluenesulfonate, tetramethylammonium triacetoxyborohydride, tetrapropylammonium perruthenate, and tetramethylammonium tetrafluoroborate. Among them, preferred are tetra-n-butylammonium bromide, tetrabutylammonium chloride, tetrapropylammonium bromide, tetrapropylammonium chloride, tetrapentylammonium bromide, and tetrapentylammonium chloride.

The method of preparing an aromatic polyester of the present invention can further include step (iii) between steps (i) and (ii) to purify the solution produced through the reaction in step (i). The purification in step (iii) includes separating a solution containig the aromatic polyester from the solution produced through the reaction in step (i) and separating the aromatic polyester itself from the solution produced through the reaction in step (i). In the former purification, the separated solution containing the aromatic polyester is used in the reaction in step (ii). In the latter purification, the separated aromatic polyester itself is used in the reaction in step (ii). Techniques for these purification processes are not specifically limited, and known techniques can be employed. An example of the purification, in which the soluction containing the aromatic polyester is separated from the solution produced through the reaction in step (i), involves washing the solution produced through the reaction in step (i) preferably with water, for instance, ion-exchanged water, to obtain a solution containg the aromatic polyester, preferably an organic phase containing the aromatic polyester. An example of the purification for separation of the aromatic polyester itself from the solution produced through the reaction in step (i) involves washing the solution produced through the reaction in step (i) preferably with water, for instance, ion-exchanged water, to obtain a solution containg the aromatic polyester, preferably an organic phase containing the aromatic polyester, and then separating the aromatic polyester from the resultant solution. In this case, examples of a method of separating the aromatic polyester from the solution include a technique in which the solution is mixed with a solvent containing alcohol such as methanol to precipitate the aromatic polyester, and the resultant product is then filtered for the separation.

The polyhydric phenols may be various known phenols, such as di-, tri-, and tetrahydric phenols. Examples of the polyhydric phenols include 2,2'-dihydroxybiphenyl, 3,3'-dihydroxybiphenyl, 3,4'-dihydroxybiphenyl, 4,4'-dihydroxydiphenyl ether, 2,2'-bis-(4-hydroxyphenyl)propane [bisphenol A], 2,4'-dihydroxydiphenyl methane, bis-(4-hydroxyphenyl)methane, bis-(2-hydroxyphenyl)methane, bis-(4-hydroxy-2,6-dimethyl-3-methoxyphenyl)methane, 1,1-bis-(4-hydroxyphenyl)ethane, 1,1-bis-(4-hydroxyphenyl)cyclohexane, 1,2-bis-(4-hydroxyphenyl)ethane, 1,1-bis-(4-hydroxy-2-chlorophenyl)ethane, 1,1'-binaphthalene-2,2'-diol, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,6-dihydroxynaphthalene, 2,7-dihydroxynaphthalene, 9,9-bis(4-hydroxyphenyl)fluorene, 9,9-bis(5-methyl-4-hydroxyphenyl)fluorene, 1,2-(9-oxofluorene)diol, 1,5-(9-oxofluorene)diol, 1,6-(9-oxofluorene)diol, 1,7-(9-oxofluorene)diol, 2,3-(9-oxofluorene)diol, 2,7-(9-oxofluorene)diol, 2,2-bis-(4-hydroxynaphthyl)propane, 2,2-bis-(3,5-dimethyl-4-hydroxyphenyl)propane, 2,2-bis-(4-hydroxyphenyl)pentane, 3,3-bis-(4-hydroxyphenyl)phenylmethane, para-α,α'-bis-(4-hydroxyphenyl)-para-diisopropylbenzene, bis-(4-hydroxyphenyl)ether, 4,3'-dihydroxydiphenyl ether, 4,2'-dihydroxydiphenyl ether, 2,2'-dihydroxydiphenyl ether, 2,3'-hydroxydiphenyl ether, 4,4'-dihydroxy-2,6-dimethyldiphenyl ether, bis-(hydroxynaphthyl)ether, 3,4'-dihydroxydiphenyl, bis-(4-hydroxyphenyl)sulfone, bis-(3-hydroxyphenyl)sulfone, 2,4'-dihydroxydiphenyl sulfone, catechol, 3-methylcatechol, 4-methylcatechol, 3-ethylcatechol, 4-ethylcatechol, 3-n-propylcatechol, 4-n-propylcatechol, 3-(t-butyl)catechol, 3-n-pentylcatechol, 4-n-pentylcatechol, 4-(1,1-dimethylpropyl)catechol, 4-hexylcatechol, 4-cyclohexylcatechol, 4-(1,1,3,3-tetramethylbutyl)catechol, 4-nonylcatechol, 3,4-dimethylcatechol, 3,5-dimethylcatechol, 3,6-dimethylcatechol, 4,5-dimethylcatechol, 4-methyl-5-ethylcatechol, 3-chlorocatechol, 4-chlorocatechol, 3-bromocatechol, 4-bromocatechol, 3-fluorocatechol, 4-fluorocatechol, 3,5-dichlorocatechol, 4,5-dichlorocatechol, 3,4-dichlorocatechol, 3,4-dibromocatechol, 3,5-dibromocatechol, 4,5-dibromocatechol, 4-chloro-5-nitrocatechol, 3-chloro-6-methoxycatechol, 5-bromo-4-nitrocatechol, 4-bromo-5-methylcatechol, 3-bromo-5-(t-butyl)catechol, 3,4,5-trichlorocatechol, 3,4,5-tribromocatechol, 3,4,6-tribromocatechol, tetrachlorocatechol, tetrabromocatechol, 3-aminocatechol, 4-aminocatechol, 3-(2-aminoethyl)catechol, 4-(2-methylaminoethyl)catechol, 4-(2-dimethylaminoethyl)catechol, 4-(2-aminoethyl)catechol, 6-amino-4-(2-aminoethyl)catechol, 3-nitrocatechol, 3,4-dinitrocatechol, 3,4-dinitrocatechol, 4,5-dinitrocatechol, 3-nitro-6-methoxycatechol, 4-nitro-3-methoxycatechol, 5-nitro-3-methylcatechol, 4-methoxycatechol, 6-methoxycatechol, 4-(2-hydroxyethyl)catechol, 3-propoxycatechol, 3-butyloxycatechol, 3,4-dimethoxycatechol, 3,6-dimethoxycatechol, 5-methoxy-3-(t-butyl)catechol, 3-ethoxy-(t-butyl)catechol, 3,4,6-trimethoxycatechol, resorcinol, 2-chlororesorcinol, 4-chlororesorcinol, 5-chlororesorcinol, 2,4-dichlororesorcinol, 4,6-dichlororesorcinol, 2,4,6-trichlororesorcinol, 2-bromo-4-chlororesorcinol, 4-bromo-2-chlororesorcinol, 4-chloro-5-methylresorcinol, 6-chloro-4-ethylresorcinol, 2-chloro-4-butylresorcinol, 6-chloro-4-butylresorcinol, 6-chloro-4-cyclohexylresorcinol, 2,4-dichloro-5-methyl resorcinol, trichlororesorcinol, 2-bromoresorcinol, 4-bromoresorcinol, 5-bromoresorcinol, 2,4-dibromoresorcinol, 4,6-dibromoresorcinol, 2,4,6-tribromoresorcinol, 6-bromo-4-butyl resorcinol, 2-iodoresorcinol, 4-iodoresorcinol, 5-iodoresorcinol, 4,6-diiodoresorcinol, 2,4,6-triiodoresorcinol, 2-aminoresorcinol, 5-aminoresorcinol, 4-amino-2,5-dimethylresorcinol, 4-benzaminoresorcinol, 5-mercaptoresorcinol, 5-methylthioresorcinol, 5-ethylthioresorcinol, 5-propylthioresorcinol, 5-propylthioresorcinol, 5-butylthioresorcinol, 2-benzsulfonylresorcinol, resorcinol monoacetate, resorcinol monobenzoate, 2-nitroresorcinol, 4-nitroresorcinol, 5-nitroresorcinol, 2,4-dinitroresorcinol, 4,6-dinitroresorcinol, 2,4,6-trinitroresorcinol, tetranitroresorcinol, 6-nitro-5-methoxyresorcinol, 2-nitro-5-methoxyresorcinol, 4-nitro-5-methoxyresorcinol, 2,4-dinitro-5-methylresorcinol, 2,4,6-trinitro-5-methylresorcinol, 2-methoxyresorcinol, 4-methoxyresorcinol, 5-methoxyresorcinol, 2,3-methoxyresorcinol, 2,5-methoxyresorcinol, 2-methoxy-5-methylresorcinol, 5-methoxy-4-methylresorcinol, 5-methoxy-6-methylresorcinol, 5-ethoxyresorcinol, 2-methylresorcinol, 4-methylresorcinol, 5-methylresorcinol, 2-ethylresorcinol, 4-ethylresorcinol, 5-ethylresorcinol, 2-n-propylresorcinol, 4-n-propylresorcinol, 5-n-propylresorcinol, 2-(2-propenyl)resorcinol, 4-(2-propenyl)resorcinol, 4-(2-methylethenyl)resorcinol, 2-n-butylresorcinol, 4-n-butylresorcinol, 5-n-butylresorcinol, 2-n-butylresorcinol, 4-tert-butylresorcinol, 2-n-pentylresorcinol, 4-n-pentylresorcinol, 5-n-pentylresorcinol, 4-(1-methylbutyl)resorcinol, 5-(2-methyl-1-ethylpropyl)resorcinol, 2-n-hexylresorcinol, 4-n-hexylresorcinol, 5-n-hexylresorcinol, 4-(4-methylpentyl)resorcinol, 5-(4-methylpentyl)resorcinol, 5-(1,1-dimethylbutyl)resorcinol, 5-(1,2-dimethylbutyl)resorcinol,5-(1-methyl-1-pentenyl)resorcinol, 4-cyclohexylresorcinol, 4-phenylresorcinol, 4-heptylresorcinol, 5-heptylresorcinol, 5-(1-methylhexyl)resorcinol, 4-phenylmethylresorcinol, 2-octylresorcinol, 4-octylresorcinol, 5-octylresorcinol, 4-(1-methylheptyl)resorcinol, 4-(1,1,3,3-tetrabutyl)resorcinol, 4-(2-phenylethyl)resorcinol, 5-nonylresorcinol, 5-(1-methyloctyl)resorcinol, 5-(1,1-dimethylheptyl)resorcinol, 5-(1,2-dimethylheptyl)resorcinol, 5-(1,2,4-trimethylhexyl)resorcinol, 4-decylresorcinol, 5-(1-methylnonyl)resorcinol, 2,4-dimethylresorcinol, 2,5-dimethylresorcinol, 4,5-dimethylresorcinol, 4,6-dimethylresorcinol, 4-ethyl-2-methylresorcinol, 5-ethyl-2-methylresorcinol, 2-ethyl-4-methylresorcinol, 5-ethyl-4-methylresorcinol, 6-ethyl-4-methylresorcinol, 5-ethenyl-4-methylresorcinol, 2,4-dimethylresorcinol, 5-methyl-4-propylresorcinol, 2-methyl-5-sec-butylresorcinol, 4,6-di(isopropyl)resorcinol, 4-ethyl-6-pentylresorcinol, 4,6-di-(tert-butyl)resorcinol, 2-methyl-4-(benzyl)resorcinol, 2,4,5-trimethylresorcinol, 2,4,6-trimethylresorcinol, 4,5,6-trimethylresorcinol, 4,6-dimethyl-5-sec-butylresorcinol, tetramethylresorcinol, 2-hydroxyethylresorcinol, 5-trifluoromethylresorcinol, hydroquinone, phenylhydroquinone, chlorohydroquinone, methylhydroquinone, trifluorohydroquinone, tetrafluorohydroquinone, 2-chloro-3-methoxyhydroquinone, 2-chloro-5-methoxyhydroquinone, 2-chloro-6-methoxyhydroquinone, 2,3-dichlorohydroquinone, 2,5-dichlorohydroquinone, 2,6-dichlorohydroquinone, trichlorohydroquinone, tetrachlorohydroquinone, bromohydroquinone, 3-bromo-2,6-dimethylhydroquinone, 2,5-dibromohydroquinone, 2,6-dibromohydroquinone, tribromohydroquinone, iodohydroquinone, 2,6-diiodohydroquinone, tetraiodohydroquinone, nitrohydroquinone, 2,6-dinitrohydroquinone, methoxyhydroquinone, 2-methoxy-3-methylhydroquinone, 2-methoxy-5-methylhydroquinone, 3-methoxy-2-methylhydroquinone, 5-methoxy-2-methylhydroquinone, 2-methoxy-6-propylhydroquinone, 2-methoxy-5-propenylhydroquinone, 2,3-dimethoxyhydroquinone, 2,5-dimethoxyhydroquinone, 2,6-dimethoxyhydroquinone, phenoxyhydroquinone, mercaptohydroquinone, acetylhydroquinone, benzoylhydroquinone, hydroxymethylhydroquinone, methylhydroquinone, 2-methyl-6-ethylhydroquinone, 2-methyl-5-isopropylhydroquinone, 2-methyl-5-cyclohexylhydroquinone, 2,3-dimethylhydroquinone, 2,5-dimethylhydroquinone, 2,6-dimethylhydroquinone, trimethylhydroquinone, tetramethylhydroquinone, ethylhydroquinone, 2,6-diethylhydroquinone, vinylhydroquinone, 5-ethoxyresorcinol, 2-methylresorcinol, 4-methylresorcinol, 5-methylresorcinol, 2-ethylresorcinol, 4-ethylresorcinol, 5-ethylresorcinol, 2-n-propylresorcinol, 4-n-propylresorcinol, 5-n-propylresorcinol, 2-(2-propenyl)resorcinol, 4-(2-propenyl)resorcinol, 4-(1-methylethenyl)resorcinol, 2-n-butylresorcinol, 4-n-butylresorcinol, 5-n-butylresorcinol, 5-sec-butylresorcinol, 4-tert-butylresorcinol, 2-n-pentylresorcinol, 4-n-pentylresorcinol, 5-n-pentylresorcinol, 4-(1-methylbutyl)resorcinol, 5-(2-methyl-1-ethylpropyl)resorcinol, 2-n-hexylresorcinol, 4-n-hexylresorcinol, 5-n-hexylresorcinol, 4-(4-methylpentyl)resorcinol, 5-(4-methylpentyl)resorcinol, 5-(1,1-dimethylbutyl)resorcinol, 5-(1,2-dimethylbutyl)resorcinol, 5-(1-methyl-1-pentenyl)resorcinol, 4-cyclohexylresorcinol, 4-phenylresorcinol, 4-heptylresorcinol, 5-heptylresorcinol, 5-(1-methylhexyl)resorcinol, 4-phenylmethylresorcinol, 2-octylresorcinol, 5-octylresorcinol, 4-(1-methylheptyl)resorcinol, 4-(1,1,3,3-tetramethylbutyl)resorcinol, 4-(2-phenethyl)resorcinol, 5-nonylresorcinol, 5-(1-methyloctyl)resorcinol, 5-(1,1-dimethylheptyl)resorcinol, 5-(1,2-dimethylheptyl)resorcinol, 5-(1,2,4-trimethylhexyl)resorcinol, 4-decylresorcinol, 5-(1-methylnonyl)resorcinol, 2,4-dimethylresorcinol, 2,5-dimethylresorcinol, 4,5-dimethylresorcinol, 4,6-dimethylresorcinol, 4-ethyl-2-methylresorcinol, 5-ethyl-2-methylresorcinol, 2-ethyl-4-methylresorcinol, 5-ethyl-4-methylresorcinol, 6-ethyl-4-methylresorcinol, 5-ethenyl-4-methylresorcinol, 2,4-dimethylresorcinol, 5-methyl-4-propylresorcinol, 2-methyl-5-sec-butylresorcinol, 4,6-diisopropylresorcinol, 4-ethyl-6-pentylresorcinol, 4,6-di-tert-butylresorcinol, 2-methyl-4-(benzyl)resorcinol, 2,4,5-trimethylresorcinol, 2,4,6-trimethylresorcinol, 4,5,6-trimethylresorcinol, 4,6-dimethyl-5-sec-butylresorcinol, tetramethylresorcinol, 2-hydroxyethylresorcinol, 5-trifluoromethylresorcinol, n-propylhydroquinone, isopropylhydroquinone, 1-propenylhydroquinone, 2-propenylhydroquinone, 2,5-diisopropylhydroquinone, 4-butylhydroquinone, 4-butylhydroquinone, 2,3-di(tert-butyl)hydroquinone, 2,5-di(tert-butyl)hydroquinone, 2,6-di(tert-butyl)hydroquinone, 2-methyl-2-propenylhydroquinone, hexylhydroquinone, 4-methylpentylhydroquinone, cyclohexylhydroquinone, 4-phenylmethylhydroquinone, octylhydroquinone, 2,2'-methylidenebisphenol, 3,3'-methylidenebisphenol, 4,4'-methylidenebisphenol, 2,2'-methylidenebis(4-methylphenol), 2,2'-methylidenebis(5-methylphenol), 2,2'-methylidenebis(6-methylphenol), 4,4'-methylidene(2-methylphenol), 4,4'-methylidene(3-methylphenol), 2,2'-methylidenebis(4,6-dimethylphenol), 2,2'-methylidenebis(3,5-dimethylphenol), 4,4'-methylidenebis(2,6-dimethylphenol), 3,3'-methylidenebis(2,4,6-trimethylphenol), 2,2'-methylidenebis(4-propylphenol), 4,4'-methylidenebis(2-propylphenol), 4,4'-methylidenebis(2-methyl-6-ethylphenol), 2,2'-methylidenebis(3,4,5,6-tetramethylphenol), 4,4'-methylidenebis(2,3,5,6-tetramethylphenol), 2,2'-methylidenebis(4-tert-butylphenol), 4,4'-methylidenebis(2-methyl-5-isopropylphenol), 4,4'-methylidenebis(3-methyl-6-isopropylphenol), 4,4'-methylidenebis(5-methyl-6-isopropylphenol), 2,2'-methylidenebis(4-tert-butyl-6-methylphenol), 2,2'-methylidenebis(6-tert-butyl-4-methylphenol), 4,4'-methylidenebis(4-tert-butyl-6-methylphenol), 4,4'-methylidenebis(2-tert-butyl-5-methylphenol), 2,2'-methylidenebis(3,4-dimethyl-6-isopropylphenol), 2,2'-methylidenebis(6-tert-butyl-4-methylphenol), 2,2'-methylidenebis(4-(1,1,3,3-tetramethylbutyl)phenol), 2,2'-methylidenebis(4,6-di-tert-butylphenol), 2,2'-methylidenebis(4,6-tert-butylphenol), 4,4'-methylidenebis(2,6-tert-butylphenol), 4,4'-methylidenebis(3,5-di-tert-butylphenol), 2,2'-methylidenebis(4-chlorophenol), 4,4'-methylidenebis(2-chlorophenol), 2,2'-methylidenebis(4-bromophenol), 2,2'-methylidenebis(4,6-dichlorophenol), 2,2'-methylidenebis(4,5-dichlorophenol), 3,3'-methylidenebis(4,5-dichlorophenol), 4,4'-methylidenebis(2,5-dichlorophenol), 4,4'-methylidenebis(2,6-dichlorophenol), 2,2'-methylidenebis(4,6-dibromophenol), 4,4'-methylidenebis(2,6-dibromophenol), 2,2'-methylidenebis(3,4,6-trichlorophenol), 3,3'-methylidenebis(2,4,6-trichlorophenol), 2,2'-methylidenebis(6-bromo-4-chlorophenol), 2,2'-methylidenebis(4-bromo-6-nitrophenol), 2,2'-methylidenebis(6-chloro-4-nitrophenol), 2,2'-methylidenebis(4-nitrophenol), 4,4'-methylidenebis(2-nitrophenol), 2,2'-methylidenebis(4,6-dinitrophenol), 3,3'-methylidenebis(6-methoxyphenol), 4,4'-methylidenebis(2-methoxyphenol), 2,2'-methylidenebis(4-chloro-6-methylphenol), 2,2'-methylidenebis(6-chloro-4-methylphenol), 4,4'-methylidenebis(2-chloro-6-methylphenol), 2,2'-methylidenebis(6-bromo-4-methylphenol), 4,4'-methylidenebis(6-bromo-2-methylphenol), 2,2'-methylidenebis(4-chloro-3,5-dimethylphenol), 2,2'-methylidenebis(3-chloro-4,6-dimethylphenol), 2,2'-methylidenebis(6-bromo-4,5-dimethylphenol), 4,4'-methylidenebis(2-chloro-3,5,6-trimethylphenol), 2,2'-methylidenebis(4-chloro-6-isopropylphenol), 2,2'-methylidenebis(6-chloro-4-trert-butylphenol), 2,2'-methylidenebis(4-chloro-3-methyl-6-isopropylphenol), 2,2'-methylidenebis(4-chloro-6-tert-butyl-3-methylphenol), 2,2'-methylidenebis(4,6-dichloro-3-methylphenol), 2,2'-methylidenebis(6-nitro-4-tert-butylphenol), 4,4'-isopropylidenebisphenol, 2,2'-isopropylidenebis(5-methylphenol), 4,4'-isopropylidenebis(2-methylphenol), 4,4'-isopropylidenebis(2-cyclohexylphenol), 4,4'-isopropylidenebis(2,6-dibromophenol), 4,4'-isopropylidenebis(2-nitrophenol), 4,4'-isopropylidenebis(2,6-dinitrophenol), 4,4'-butanediylbis(2-methylphenol), 4,4'-butylidenebisphenol, 2,2'-butylidenebis(6-tert-butyl-4-methylphenol), 4,4'-butylidenebis(6-tert-butyl-2-methylphenol), 4,4'-sec-butylidenebisphenol, 4,4'-sec-butylidenebis(3-methylphenol), 2,2'-sec-butylidenebis(3-methyl-6-isopropylphenol), 2,2'-sec-butylidenebis(6-tert-butyl-4-methylphenol), 4,4'-isobutylidenebisphenol, 4,4'-isobutylidenebis(6-tert-butyl-4-methylphenol), 4,4'-(1,3-cyclohexanediyl)bisphenol, 4,4'-cyclohexylidenebisphenol, 4,4'-cyclohexylidenebis(2-chlorophenol), 4,4'-cyclohexylidenebis(2,6-dichlorophenol), 2,2'-thiobisphenol, 4,4'-thiobisphenol, 4,4'-thiobis(2-methylphenol), 2,2'-thiobis(4,5-dimethylphenol), 2,2'-thiobis(4,6-dimethylphenol), 4,4'-thiobis(2,6-dimethylphenol), 2,2'-thiobis(6-tert-butyl-4-methylphenol), 4,4'-thiobis(2-tert-butyl-5-methylphenol), 2,2'-thiobis(4-fluorophenol), 2,2'-thiobis(4-chlorophenol), 4,4'-thiobis(3-chlorophenol), 2,2'-thiobis(4-chloro-5-methylphenol), 2,2'-thiobis(4,6-dichlorophenol), 4,4'-thiobis(2-bromophenol), 2,2'-thiobis(5-nitrophenol), 4,4'-sulfinylbisphenol, 4,4'-sulfinylbis(2-methylphenol), 4,4'-sulfinylbis(2-tert-butyl-5-methylphenol), 4,4'-sulfinylbis(2-chlorophenol), 4,4'-sulfinylbis(4-chlorophenol), 2,2'-sulfinylbis(4,6-dichlorophenol), 4,4'-sulfinylbis(2-bromophenol), 2,2'-sulfonylbisphenol, 4,4'-sulfonylbisphenol, 4,4'-sulfonylbis(2-methylphenol), 4,4'-sulfonylbis(2,5-dimethylphenol), 4,4'-sulfonylbis(2-tert-butyl-5-methylphenol), 4,4'-sulfonylbis(2-chlorophenol), 4,4'-sulfonylbis(3-chlorophenol), 4,4'-sulfonylbis(2-bromophenol), 4,4'-sulfonylbis(2-nitrophenol), 2, 3'-oxybisphenol, 2,2'-ethanediyldimercaptobisphenol, 4,4'-methylenebispyrocatechol, 4,4'-methylenediresorcinol, 4,4'-ethylidenebisresorcinol, 2,2'-(propane-1,3-diyl)bis(1,3-benzenediol), 2,2'-(butane-1,4-diyl)bis(1,3-benzenediol), 2,2'-(pentane-1,5-diyl)bis(1,3-benzenediol), 2,2'-methylenebis(6-chlororesorcin), 2,2'-methylenebis(4-chloro-6-nitroresorcin), 4,4'-sulfinylbisresorcinol, 2,2'-(ethane-1,2-diyl)bishydroquinone, 4,4'-sulfonylbishydroquinone, 2,6,2'-trihydroxybiphenyl, 3,5,3'-trihydroxybiphenyl, 3,4,4'-trihydroxybiphenyl, 2,4,4'-trihydroxydiphenyl ether, 2,4,4'-trihydroxydiphenyl methane, 1,1'-binaphthalene-2,3,2'-triol, 1,2,3-trihydroxynaphthalene, 1,3,5-trihydroxynaphthalene, 1,4,5-trihydroxynaphthalene, 1,5,6-trihydroxynaphthalene, 1,6,7-trihydroxynaphthalene, 1,7,8-trihydroxynaphthalene, 2,6,2',6'-tetrahydroxybiphenyl, 3,5,3',5'-tetrahydroxybiphenyl, 3,4,3',4'-tetrahydroxybiphenyl, 2,4,2',4'-tetrahydroxydiphenyl ether, 2,2'-bis-(2,4-hydroxyphenyl)propane, 2,4,2',4'-tetrahydroxydiphenyl methane, bis-(2,4-hydroxyphenyl)methane, bis-(2,6-hydroxyphenyl)methane, bis-(2,4-hydroxy-2,6-dimethyl-3-methoxyphenyl)methane, 1,1-bis-(2,4-hydroxyphenyl)ethane, 1,1-bis-(2,4-hydroxyphenyl)cyclohexane, 1,2-bis-(2,4-hydroxyphenyl)ethane, 1,1-bis-(4,6-hydroxy-2-chlorophenyl)ethane, 1,1'-binaphthalene-2,3,2',3'-tetraol, and 1,2,3,4-tetrahydroxynaphthalene. Among these, 2,2-bis(4-hydroxyphenyl)propane[bisphenol A] is especially preferred. Also preferred are fully aromatic hydroxy group-containig compounds having a rigid molecular structure which does not contain an alkylene chain in the main chain, for example, biphenols, binaphthalenediols, dihydroxynaphthalenes, dihydroxyfluorenes, dihydroxyoxofluorenes, catechols, resorcinols, and hydroquinones.

The aromatic polycarboxylic acid may be selected from various known aromatic polycarboxylic acids, such as di-, tri-, and tetracarboxylic acids. Examples of the polycarboxylic acids include phthalic acid, dimethyl phthalate, diphenyl phthalate, isophthalic acid, dimethyl isophthalate, di(cyanomethyl) isophthalate, diphenyl isophthalate, di(2,4-dinitrophenyl) isophthalate, (1,1-dioxobenzothiophene-3-yl) isophthalate, di(3-benzoisoxazolyl) isophthalate, di(2-benzothiazolyl) isophthalate, (1-benzotriazolyl) isophthalate, S,S'-dipropyl dithioisophthalate, S,S'-di(p-nitrophenyl) dithioisophthalate, S,S'-di(2-benzoxazolyl) dithioisophthalate, S,S'-di(2-benzothiazolyl) dithioisophthalate, 4-methylisophthalic acid, dimethyl isophthalate, 5-methylisophthalic acid, dimethyl 5-methylisophthalate, 4,5-dimethylisophthalic acid, 4,6-dimethylisophthalic acid, 4-chloroisophthalic acid, dimethyl 4-chloroisophthalate, 5-chloroisophthalic acid, dimethyl 5-chloroisophthalate, 4,6-dichloroisophthalic acid, dimethyl 4,6-dichloroisophthalate, 4-bromoisophthalic acid, 4,6-dibromoisophthalic acid, dimethyl 4,6-dibromoisophthalate, terephthalic acid, dimethyl terephthalate, di(cyanomethyl) terephthalate, diphenyl terephthalate, di(3-benzoisoxazolyl) terephthalate, di(2-benzothiazolyl) terephthalate, 2-methylterephthalic acid, dimethyl 2-methylterephthalate, 2,5-dimethylterephthalic acid, 2,6-dimethylterephthalic acid, dimethyl 2,6-dimethylterephthalate, 2-chloroterephthalic acid, dimethyl 2-chloroterephthalate, 2,5-dichloroterephthalic acid, dimethyl 2,5-dichloroterephthalate, tetrachloroterephthalic acid, dimethyl tetrachloroterephthalate, 2-bromoterephthalic acid, dimethyl 2-bromoterephthalate, 2,5-dibromoterephthalic acid, diethyl 2,5-dibromoterephthalate, 2,2'-diphenyldicarboxylic acid, 3,3'-diphenyldicarboxylic acid, 3,4'-diphenyldicarboxylic acid, 4,4'-diphenyldicarboxylic acid, 3,4'-dicarboxydiphenyl ether, 4,4'-dicarboxydiphenyl ether, 1,2-naphthalenedicarboxylic acid, dimethyl 1,2-naphthalenedicarboxylate, 1,3-naphthalenedicarboxylic acid, 1,4-naphthalenedicarboxylic acid, dimethyl 1,4-naphthalenedicarboxylate, 1,5-naphthalenedicarboxylic acid, dimethyl 1,5-naphthalene dicarboxylate, 1,6-naphthalene dicarboxylic acid, dimethyl 1,6-naphthalenedicarboxylate, diphenyl 1,6-naphthalenedicarboxylate, 1,7-naphthalenedicarboxylic acid, dimethyl 1,7-naphthalenedicarboxylate, 1,8-naphthalenedicarboxylic acid, dimethyl 1,8-naphthalenedicarboxylate, diphenyl 1,8-naphthalenedicarboxylate, 2,3-naphthalenedicarboxylic acid, dimethyl 2,3-naphthalenedicarboxylate, diphenyl 2,3-naphthalenedicarboxylate, 2,6-naphthalenedicarboxylic acid, dimethyl 2,6-naphthalenedicarboxylate, diphenyl 2,6-naphthalenedicarboxylate, 2,7-naphthalenedicarboxylic acid, diphenyl 2,7-naphthalenedicarboxylate, 1,2-(9-oxofluorene)dicarboxylic acid, dimethyl 1,2-(9-oxofluorene)dicarboxylate, dimethyl 1,5-(9-oxofluorene)dicarboxylate, 1,6-(9-oxofluorene)dicarboxylic acid, dimethyl 1,6-(9-oxofluorene)dicarboxylate, 1,7-(9-oxofluorene)dicarboxylic acid, dimethyl 1,7-(9-oxofluorene)dicarboxylate, 2,3-(9-oxofluorene)dicarboxylic acid, dimethyl 2,3-(9-oxofluorene)dicarboxylate, 2,7-(9-oxofluorene)dicarboxylic acid, dimethyl 2,7-(9-oxofluorene)dicarboxylate, 1,4-anthracenedicarboxylic acid, 1,5-anthracenedicarboxylic acid, diethyl 1,5-anthracenedicarboxylate, 1,8-anthracenedicarboxylic acid, 1,9-anthracenedicarboxylic acid, 2,3-anthracenedicarboxylic acid, 9,10-anthracenedicarboxylic acid, dimethyl 9,10-anthracenedicarboxylate, 1,2-anthraquinonedicarboxylic acid, dimethyl 1,2-anthraquinonedicarboxylate, 1,3-1,2-anthraquinonedicarboxylic acid, 1,4-anthraquinonedicarboxylic acid, 1,5-anthraquinonedicarboxylic acid, dimethyl 1,5-anthraquinonedicarboxylate, diphenyl 1,5-anthraquinonedicarboxylate, 1,6-anthraquinonedicarboxylic acid, 1,7-anthraquinonedicarboxylic acid, 1,8-anthraquinonedicarboxylic acid, 2,3-anthraquinonedicarboxylic acid, 2,7-anthraquinonedicarboxylic acid, 2,3-biphenyldicarboxylic acid, dimethyl 2,3-biphenyldicarboxylate, 2,5-biphenyldicarboxylic acid, 2,6-biphenyldicarboxylic acid, 3,4-biphenyldicarboxylic acid, dimethyl 3,4-biphenyldicarboxylate, 3,4-biphenyldicarboxylic acid, dimethyl 3,4-biphenyldicarboxylate, 3,4-biphenyldicarboxylic acid, 2,2'-biphenyldicarboxylic acid, dimethyl 2,2'-biphenyldicarboxylate, diphenyl 2,2'-biphenyldicarboxylate, 2,4'-biphenyldicarboxylic acid, dimethyl 2,4'-biphenyldicarboxylate, 3,3'-biphenyldicarboxylic acid, dimethyl 3,3'-biphenyldicarboxylate, 3,4'-biphenyldicarboxylic acid, dimethyl 3,4'-biphenyldicarboxylate, 4,4'-biphenyldicarboxylic acid, dimethyl 4,4'-biphenyldicarboxylate, diphenyl 4,4'-biphenyldicarboxylate, 1,5-biphenylenedicarboxylic acid, dimethyl 1,5-biphenylenedicarboxylate, 1,8-biphenylenedicarboxylic acid, dimethyl 1,8-biphenylenedicarboxylate, 2,6-biphenylenedicarboxylic acid, dimethyl 2,6-biphenylenedicarboxylate, 2,7-biphenylenedicarboxylic acid, dimethyl 2,7-biphenylenedicarboxylate, 2,2'-dimethyl-4,4'-biphenyldicarboxylic acid, diethyl 2,2'-dimethyl-4,4'-biphenyldicarboxylate, 4,4"-p-terphenyldicarboxylic acid, dimethyl 4,4"'-p-quaterphenyldicarboxylate, 4,4"'-p-quaterphenyldicarboxylic acid, 2,2'-methylenedibenzoic acid, dimethyl 2,2'-methylenedibenzoate, 2,4'-methylenedibenzoic acid, dimethyl 2,4'-methylenedibenzoate, 3,3'-methylenedibenzoic acid, 4,4'-methylenedibenzoic acid, dimethyl 4,4'-methylenedibenzoate, 4,4'-isopropylidenedibenzoic acid, 2,2'-bibenzyldicarboxylic acid, dimethyl 2,2'-benzyldicarboxylate, dimethyl 3,3'-bibenzyldicarboxylate, 4,4'-bibenzyldicarboxylic acid, dimethyl 4,4'-bibenzyldicarboxylate, 2,2'-trans-stilbenedicarboxylic acid, dimethyl 2,2'-trans-stilbenedicarboxylate, diphenyl 2,2'-trans-stilbenedicarboxylate, 2,4'-trans-stilbenedicarboxylic acid, 4,4'-trans-stilbenedicarboxylic acid, 4,4'-trans-stilbenedicarboxylic acid, 2,4'-trans-stilbenedicarboxylic acid, 4,4'-trans-stilbenedicarboxylic acid, dimethyl 4,4'-trans-stilbenedicarboxylate, 2,2'-tolanedicarboxylic acid, dimethyl 2,2'-tolanedicarboxylate, 2,4'-tolanedicarboxylic acid, 4,4'-tolanedicarboxylic acid, dimethyl 4,4'-tolanedicarboxylate, pseudo-p-dicarboxy[2,2]paracyclophane, 4,4'-carbonyldibenzoic acid, 3,3'-oxydibenzoic acid, 4,4'-oxydibenzoic acid, dimethyl 4,4'-oxydibenzoate, diphenyl 4,4'-oxydibenzoate, 4,4'-thiodibenzoic acid, 4,4'-sulfonyldibenzoic acid, dimethyl 4,4'-sulfonyldibenzoate, 3,3'-dithiodibenzoic acid, 4,4'-dithiodibenzoic acid, diethyl 4,4'-dithiodibenzoate, 2,2'-3,3'-dithiodibenzoic acid, 2,2'-azobenzenedicarboxylic acid, dimethyl 2,2'-azobenzenedicarboxylate, 3,3'-azobenzenedicarboxylic acid, dimethyl 3,3'-azobenzenedicarboxylate, 4,4'-azobenzenedicarboxylic acid, dimethyl 4,4'-azobenzenedicarboxylate, homophthalic acid, dimethyl homophthalate, homoisophthalic acid, dimethyl homoisophthalate, homoterephthalic acid, dimethyl homoterephthalate, o-phenylenediacetic acid, diethyl o-phenylenediacetate, m-phenylenediacetic acid, diethyl m-phenylenediacetate, p-phenylenediacetic acid, diethyl p-phenylenediacetate, 3,3'-o-phenylenedipropionic acid, diethyl 3,3'-o-phenylenedipropionate, 3,3'-m-phenylenedipropionic acid, diethyl 3,3'-m-phenylenedipropionate, 3,3'-p-phenylenedipropionic acid, diethyl 3,3'-p-phenylenedipropionate, 2-carboxycinnamic acid, 3-carboxycinnamic acid, 4-carboxycinnamic acid, diethyl 4-carboxycinnamate, 3t,3't-o-phenylenediacrylic acid, dimethyl 3t,3't-o-phenylenediacrylate, 3t,3't-m-phenylenediacrylic acid, dimethyl 3t,3't-m-phenylenediacrylate, 3t,3't-p-phenylenediacrylic acid, dimethyl 3t,3't-p-phenylenediacrylate, m-phenylenepropiolic acid, dimethyl m-phenylenepropiolate, 1,4-naphthalenediacetic acid, 1,5-naphthalenediacetic acid, dimethyl 1,5-naphthalenediacetate, 3,3'-(1,4-naphthalene)dipropionic acid, diethyl 3,3'-(1,4-naphthalene)dipropionate, 4,4'-biphenyldiacetic acid, diethyl 4,4'-biphenyldiacetate, 3,3'-(4,4'-biphenyl)dipropionic acid, 3,3'-[4,4'-(methylenedi-p-phenylene)]dipropionic acid, 4,4'-bibenzyldibutyric acid, 3,3'-(4,4'-bibenzyl)dipropionic acid, 4,4'-(oxydi-p-phenylene)dibutyric acid, 3,3'-[4,4'-(oxydi-p-phenylene)]dipropionic acid, 3,3'-[4,4'-(oxydi-p-phenylene)]dibutyric acid, diphenylsulfonedicarboxylic acid, 1,4-cyclohexanedicarboxylic acid, 2,3-furandicarboxylic acid, dimethyl 2,3-furandicarboxylate, 2,4-furandicarboxylic acid, dimethyl 2,4-furandicarboxylate, 2,5-furandicarboxylic acid, dimethyl 2,5-furandicarboxylate, diphenyl 2,5-furandicarboxylate, 3,4-furandicarboxylic acid, dimethyl 3,4-furandicarboxylate, 3,4-diphenyl-2,5-furandicarboxylic acid, dimethyl 3,4-diphenyl-2,5-furandicarboxylate, 3,3'-(2,5-furan)dipropionic acid, dimethyl 3,3'-(2,5-furan)dipropionate, 2,5-cis-tetrahydrofurandicarboxylic acid, dimethyl 2,5-cis-tetrahydrofurandicarboxylate, 3,3'-(2,5-cis-tetrahydrofuran)dipropionic acid, diethyl 3,3'-(2,5-cis-tetrahydrofuran)dipropionate, 2,3-thiophenedicarboxylic acid, dimethyl 2,3-thiophenedicarboxylate, 2,4-thiophenedicarboxylic acid, dimethyl 2,4-thiophenedicarboxylate, 2,5-thiophenedicarboxylic acid, dimethyl 2,5-thiophenedicarboxylate, diphenyl 2,5-thiophenedicarboxylate, 3,4-thiophenedicarboxylic acid, dimethyl 3,4-thiophenedicarboxylate, 3,4-diphenyl-2,5-thiophenedicarboxylic acid, dimethyl 3,4-diphenyl-2,5-thiophenedicarboxylate, 2,5-thiophenediacetic acid, 3,3'-(2,5-thiophene)dipropionic acid, diethyl 3,3'-(2,5-thiophene)dipropionate, 2,5-cis-tetrahydrothiophenedicarboxylic acid, diethyl 2,5-cis-tetrahydrothiophenedicarboxylate, 3,4-cis-tetrahydrothiophenedicarboxylic acid, dimethyl 3,4-cis-tetrahydrothiophenedicarboxylate, 1,1-dioxo-2,5-cis-tetrahydrothiophenedicarboxylic acid, diethyl 1,1-dioxo-2,5-cis-tetrahydrothiophenedicarboxylate, 2,6-4H-pyranedicarboxylic acid, 4-oxo-2,6-4H-pyranedicarboxylic acid, diethyl 4-oxo-2,6-4H-pyranedicarboxylate, 2,6-cis-tetrahydropyranedicarboxylic acid, dimethyl 2,6-cis-tetrahydropyranedicarboxylate, 2,6-cis-tetrahydrothiopyranedicarboxylic acid, dimethyl 2,6-cis-tetrahydrothiopyranedicarboxylate, 1,1-dioxo-2,6-cis-tetrahydrothiopyranedicarboxylic acid, dimethyl 1,1-dioxo-2,6-cis-tetrahydrothiopyranedicarboxylate, 2,8-dibenzofurandicarboxylic acid, dimethyl 2,8-dibenzofurandicarboxylate, 3,7-dibenzofurandicarboxylic acid, dimethyl 3,7-dibenzofurandicarboxylate, 4,6-dibenzofurandicarboxylic acid, dimethyl 4,6-dibenzofurandicarboxylate, 2,8-dibenzothiophenedicarboxylic acid, 5,5-dioxo-2,8-dibenzothiophenedicarboxylic acid, 9-oxo-1,8-xanthenedicarboxylic acid, 9-oxo-2,7-xanthenedicarboxylic acid, dimethyl 9-oxo-2,7-xanthenedicarboxylate, 1,6-dibenzo[1,4]dioxindicarboxylic acid, dimethyl 1,6-dibenzo[1,4]dioxindicarboxylate, 2,7-dibenzo[1,4]dioxindicarboxylic acid, dimethyl 2,7-dibenzo[1,4]dioxindicarboxylate, 2,8-dibenzo[1,4]dioxindicarboxylic acid, dimethyl 2,8-dibenzo[1,4]dioxindicarboxylate, 1,6-phenoxathiindicarboxylic acid, 4,6-phenoxathiindicarboxylic acid, dimethyl 4,6-phenoxathiindicarboxylate, 10,10-dioxo-1,6-phenoxainedicarboxylic acid, dimethyl 10,10-dioxo-1,6-phenoxainedicarboxylate, 10,10-dioxo-1,9-phenoxainedicarboxylic acid, dimethyl 10,10-dioxo-1,9-phenoxainedicarboxylate, 10,10-dioxo-2,8-phenoxainedicarboxylic acid, dimethyl 10,10-dioxo-2,8-phenoxainedicarboxylate, 10,10-dioxo-4,6-phenoxainedicarboxylic acid, 2,7-thianthrenedicarboxylic acid, dimethyl 2,7-thianthrenedicarboxylate, 10,10-dioxo-1,9-thianthrenedicarboxylic acid, 5,5,10,10-tetraoxo-2,7-thianthrenedicarboxylic acid, dimethyl 5,5,10,10-tetraoxo-2,7-thianthrenedicarboxylate, 10-oxo-10-phenyl-2,8-phenoxaphosphinedicarboxylic acid, dimethyl 9-oxabicyclo[3,3,1]nonane-2,6-dicarboxylate, diphenyl 9-oxabicyclo[3,3,1]nonane-2,6-dicarboxylate, 2,4,6,8-tetraoxaspiro[5,5]undecane-3,9-dicarboxylic acid, dimethyl 2,4,6,8-tetraoxaspiro[5,5]undecane-3,9-dicarboxylate, 2,4,6,8-tetraoxaspiro[5,5]undecane-3,9-diacetic acid, diethyl 2,4,6,8-tetraoxaspiro[5,5]undecane-3,9-diacetate, 2,3-pyrroledicarboxylic acid, dimethyl 2,3-pyrroledicarboxylate, 2,4-pyrroledicarboxylic acid, dimethyl 2,4-pyrroledicarboxylate, 2,5-pyrroledicarboxylic acid, dimethyl 2,5-pyrroledicarboxylate, 1-methyl-2,5-pyrroledicarboxylic acid, dimethyl 1-methyl-2,5-pyrroledicarboxylate, 1-phenyl-2,5-pyrroledicarboxylic acid, dimethyl 1-phenyl-2,5-pyrroledicarboxylate, 3,4-pyrroledicarboxylic acid, dimethyl 3,4-pyrroledicarboxylate, 1-methyl-3,4-pyrroledicarboxylic acid, diethyl 1-methyl-3,4-pyrroledicarboxylate, 1-phenyl-3,4-pyrroledicarboxylic acid, diethyl 1-phenyl-3,4-pyrroledicarboxylate, diethyl 3,5-dimethyl-2,4-pyrroledicarboxylate, 2,5-dimethyl-3,4-pyrroledicarboxylic acid, diethyl 2,5-dimethyl-3,4-pyrroledicarboxylate, 1,2,5-trimethyl-3,4-pyrroledicarboxylic acid, diethyl 1,2,5-trimethyl-3,4-pyrroledicarboxylate, 1-methyl-2,5-pyrrolediacetic acid, dimethyl 1-methyl-2,5-pyrrolediacetate, dimethyl 3,3'-(2,5-pyrrole)dipropionate, 3,3'-(1-methyl-2,5-pyrrole)dipropionic acid, dimethyl 3,3'-(1-methyl-2,5-pyrrole)dipropionate, diethyl 3,3'-(1-phenyl-2,5-pyrrole)dipropionate, diethyl 1-methyl-2,5-cis-pyrrolidinedicarboxylate, diethyl 1-phenyl-2,5-cis-pyrrolidinedicarboxylate, diethyl 1-methyl-2,5-pyrrolidinediacetate, 3,3'-(1-methyl-2,5-pyrrolidine)dipropionic acid, diethyl 3,3'-(1-methyl-2,5-pyrrolidine)dipropionate, diethyl 2,5-indoledicarboxylate, 2,6-indoledicarboxylic acid, diethyl 2,6-indoledicarboxylate, 9-methyl-1,8-carbazoledicarboxylic acid, 2,6-carbazoledicarboxylic acid, diethyl 2,6-carbazoledicarboxylate, 3,6-carbazoledicarboxylic acid, diethyl 3,6-carbazoledicarboxylate, 9-methyl-3,6-carbazoledicarboxylic acid, diethyl 9-methyl-3,6-carbazoledicarboxylate, 3,4-pyrazoledicarboxylic acid, dimethyl 3,4-pyrazoledicarboxylate, 2-methyl-3,4-pyrazoledicarboxylic acid, 1-phenyl-3,4-pyrazoledicarboxylic acid, dimethyl 1-phenyl-3,4-pyrazoledicarboxylate, 2-phenyl-3,4-pyrazoledicarboxylic acid, dimethyl 2-phenyl-3,4-pyrazoledicarboxylate, 3,5-pyrazoledicarboxylic acid, dimethyl 3,5-pyrazoledicarboxylate, 1-methyl-3,5-pyrazoledicarboxylic acid, dimethyl 1-methyl-3,5-pyrazoledicarboxylate, 1-phenyl-3,5-pyrazoledicarboxylic acid, dimethyl 1-phenyl-3,5-pyrazoledicarboxylate, 4,5-imidazoledicarboxylic acid, diphenyl 4,5-imidazoledicarboxylate, 1-methyl-4,5-imidazoledicarboxylic acid, dimethyl 1-methyl-4,5-imidazoledicarboxylate, 1-phenyl-4,5-imidazoledicarboxylic acid, diethyl 1-phenyl-4,5-imidazoledicarboxylate, 2,3-pyridinedicarboxylic acid, dimethyl 2,3-pyridinedicarboxylate, diphenyl 2,3-pyridinedicarboxylate, 2,4-pyridinedicarboxylic acid, dimethyl 2,4-pyridinedicarboxylate, diphenyl 2,4-pyridinedicarboxylate, 2,5-pyridinedicarboxylic acid, dimethyl 2,5-pyridinedicarboxylate, diphenyl 2,5-pyridinedicarboxylate, 2,6-pyridinedicarboxylic acid, dimethyl 2,6-pyridinedicarboxylate, diphenyl 2,6-pyridinedicarboxylate, 3,4-pyridinedicarboxylic acid, dimethyl 3,4-pyridinedicarboxylate, 3,5-pyridinedicarboxylic acid, diphenyl 3,5-pyridinedicarboxylate, 2,6-dimethyl-3,5-pyridinedicarboxylic acid, 2,4,6-trimethyl-3,5-pyridinedicarboxylic acid, dimethyl 2,5-piperidinedicarboxylate, diethyl 2,3-piperidinedicarboxylate, 2,6-cis-piperidinedicarboxylic acid, dimethyl 2,6-cis-piperidinedicarboxylate, 1-methyl-2,6-cis-piperidinedicarboxylic acid, dimethyl 1-methyl-2,6-cis-piperidinedicarboxylate, diethyl 3,5-piperidinedicarboxylate, 2,6-cis-piperidinediacetic acid, 1-methyl-2,6-cis-piperidinediacetic acid, diethyl 1-methyl-2,6-cis-piperidinediacetate, 2,3-quinolinedicarboxylic acid, dimethyl 2,3-quinolinedicarboxylate, 2,4-quinolinedicarboxylic acid, dimethyl 2,4-quinolinedicarboxylate, 2,6-quinolinedicarboxylic acid, 3,7-quinolinedicarboxylic acid, 4,8-quinolinedicarboxylic acid, dimethyl 4,8-quinolinedicarboxylate, 5,6-quinolinedicarboxylic acid, dimethyl 5,6-quinolinedicarboxylate, 5,8-quinolinedicarboxylic acid, 6,7-quinolinedicarboxylic acid, dimethyl 6,7-quinolinedicarboxylate, 6,8-quinolinedicarboxylic acid, 7,8-quinolinedicarboxylic acid, 2,2'-bipyridine-4,4'-dicarboxylic acid, dimethyl 2,2'-bipyridine-4,4'-dicarboxylate, 2,2'-bipyridine-5,5'-dicarboxylic acid, dimethyl 2,2'-bipyridine-5,5'-dicarboxylate, 2,2'-bipyridine-6,6'-dicarboxylic acid, dimethyl 3,3'-bipyridine-2,2'-dicarboxylate, 4,5-pyridazinedicarboxylic acid, 4,5-pyrimidinedicarboxylic acid, 4,6-pyrimidinedicarboxylic acid, 2,3-pyrazinedicarboxylic acid, dimethyl 2,3-pyrazinedicarboxylate, 2,5-pyrazinedicarboxylic acid, dimethyl 2,5-pyrazinedicarboxylate, diphenyl 2,5-pyrazinedicarboxylate, 2,6-pyrazinedicarboxylic acid, dimethyl 2,6-pyrazinedicarboxylate, dimethyl 1,4-piperazinediacetate, dimethyl 3,3'-(1,4-piperazine)dipropionate, 1,6-phenazinedicarboxylic acid, and dimethyl 1,6-phenazinedicarboxylate. Among these, preferred are fully aromatic polycarboxylic acids having a rigid molecular structure which does not contain an alkylene chain in the main chain, for instance, phthalic acids, terephthalic acids, isophthalic acids, biphenyldicarboxylic acids, naphthalenedicarboxylic acids, oxofluorenedicarboxylic acids, anthracenedicarboxylic acids, anthraquinonedicarboxylic acids, biphenylenedicarboxylic acids, terphenyldicarboxylic acids, quaterphenyldicarboxylic acids, azobenzenedicarboxylic acids, furandicarboxylic acids, thiophenedicarboxylic acids, pyranedicarboxylic acids, dibenzofurandicarboxylic acids, dibenzothiophenedicarboxylic acids, xanthenedicarboxylic acids, dibenzo[1,4]dioxindicarboxylic acids, phenoxathiindicarboxylic acids, thianthrenedicarboxylic acids, phenoxaphosphinedicarboxylic acids, pyrroledicarboxylic acids, indoledicarboxylic acids, carbazoledicarboxylic acids, pyrazoledicarboxylic acids, imidazoledicarboxylic acids, pyridinedicarboxylic acids, quinolinedicarboxylic acids, bipyridinedicarboxylic acids, pyrimidinedicarboxylic acids, pyrazinedicarboxylic acids, and phenazinedicarboxylic acids. Furthermore, halides or anhydrides of these aromatic dicarboxylic acids can be also used. Examples of the halides of the aromatic dicarboxylic acids include phthaloyl dichloride and naphthoyl dichloride. Among these, preferred are phthaloyl dichlorides, for example, isophthaloyl dichloride and terephthaloyl dichloride.

Although the present invention is described further in detail with refrence to the following examples, the present invention should not be limited to the examples.

### (Examples)

The characteristics of an aromatic polyester were determined as follows.

### <Weight Average Molecular Weight (Mw)>

A GPC LC20AT manufactured by SHIMADZU CORPORATION was used for measurement. Three columns, Shodex KF802, KF804, and KF806, connected in series were used. Chloroform for liquid chromatography was used as an elution medium. Commercially available polystyrenes of known molecular weights were used as standard substances.

### <Absorbance (Abs.)>

An electric furnace Muffle Furnace FP21 (trade mark) manufactured by YAMATO SCIENTIFIC CO., LTD., was used to heat a sample at 260°C for an hour. The sample was then dissolved in chloroform for absorption spectrometry [UVASOL (trade mark) manufactured by Merck KGaA] into a concentration of 200 mg/5 milliliters. Then, absorbance at a wavelength of 400 nm was measured with a UV spectrophotometer V-550 (trade mark) manufactured by JASCO Corporation.

### <Melt Flow Rate (MFR, g/10 min)>

A Melt Indexer F-W01 (trade mark) manufactured by Toyo Seiki Seisaku-sho, Ltd. was used. Measurement was performed under conditions of 320°C and a load of 10.0 kg in Examples 1 to 4 and Comparative Examples 1 and 2, and under conditions of 260°C and a load of 10.0 kg in Examples 5 to 9 and Comparative Examples 3 and 4.

### <End-capping Rate of Polyester>

An FT-NMR system JNM-ECA500 (trade mark) manufactured by JEOL Ltd. was used for analysis of the end-capping rate of a polyester. The end-capping rate of a polyester was calculated from a peak (2) (around 1.75 ppm) of methyl protons of a bisphenol A residue contained in an aromatic polyester, a peak (1) (around 6.73 ppm) of two protons which are at the ortho position to a hydroxyl group that is contained in the bisphenol A residue and is positioned at terminals of the aromatic polyester, a peak (3) (around 7.50 to 7.53 ppm) of two protons of a benzoyl chloride residue which is contained in the bisphenol A residue and is positioned at terminals of the aromatic polyester [protons at the m-position (3- or 5-position) to an ester group], and a peak (4) (around 8.16 to 8.18 ppm) of two protons of a benzoyl chloride residue which is contained in the bisphenol A residue and is positioned at terminals of the aromatic polyester [protons at the o-position (2- or 6-position) to an ester group]. The peak (2) is an indicator of all of the bisphenol A residues contained in the aromatic polyester, the peak (1) is an indicaor of the bisphenol A residue contained in the aromatic polyester and having a hydroxyl terminal, and the peaks (3) and (4) are indicators of a bisphenol A residue contained in the aromatic polyester and having a benzoyl terminal. The end-capping rate of the polyester was obtained by dividing the sum of the area ratios of the peaks (3) and (4) by the sum of the area ratios of the peaks (3), (4), and (1) and was expressed in percentage.

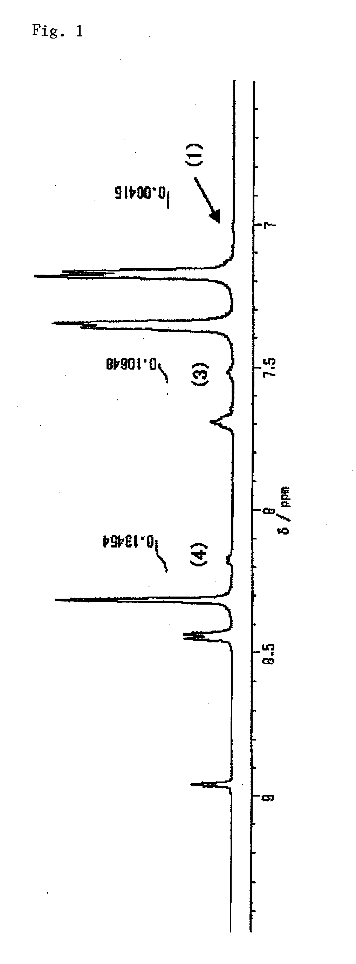

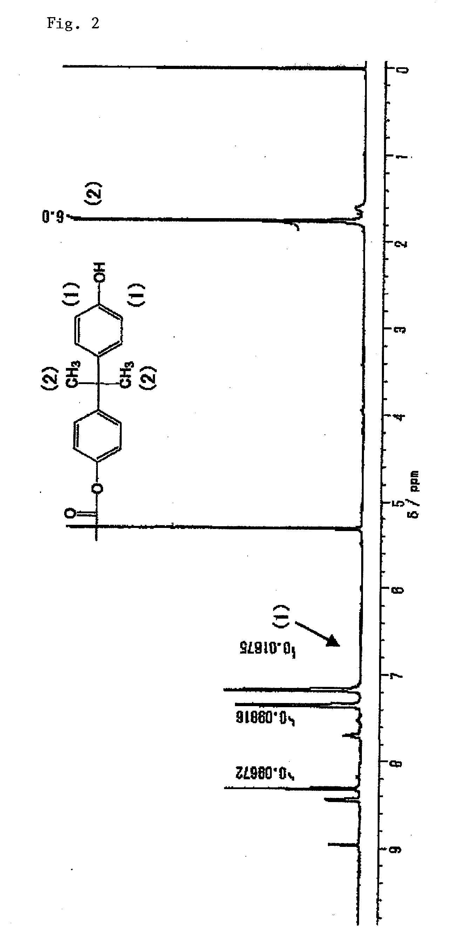

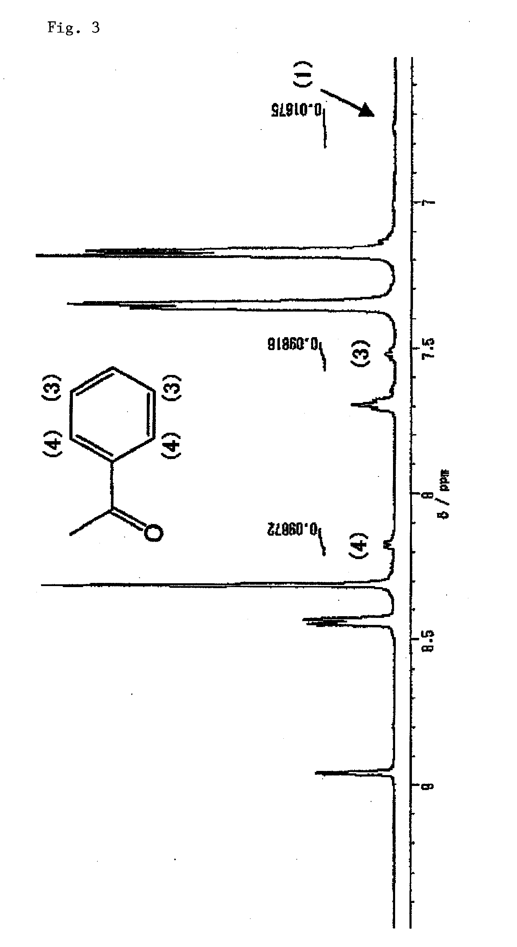

For further understanding of description, the calculation of the end-cpping rate of an aromatic polyester is explained with reference to NMR spectra of aromatic polyesters prepared in Example 1 and Comparative Example 2 (Fig. 1 and Figs. 2 and 3, respectively). In Comparative Example 2 (Figs. 2 and 3), the area ratio of the peak (2) around 1.75 ppm is 6.0, the area ratio of the peak (1) around 6.73 ppm is 0.01675, and the area ratio of the peak (3) around 7.50 to 7.53 ppm and the area ratio of the peak (4) around 8.16 to 8.18 ppm are respectively 0.09816 and 0.09672. Assuming that the entire amount of the bisphenol A residue is 1, the number of bisphenol A residues having hydroxyl terminals is 0.008375 (0.01675/2) from the area ratio of the peak (1). The number of bisphenol A residues having benzoyl terminals (indicated by " ratio of incorporated BC" in Table 1) is 0.04872 [(0.09816+0.09672)/4] from the area ratios of the peaks (3) and (4). These numbers give an end-capping rate of 85.3*%* [0.04872 x 100/(0.04872+0.008375)].

In Example 1 (Fig. 1), the area ratio of the peak (2) around 1.75 ppm is 6.0 (not illustrated), the area ratio of the peak (1) around 6.73 ppm is 0.00415, and the area ratio of the peak (3) around 7.50 to 7.53 ppm and the area ratio of the peak (4) around 8.16 to 8.18 ppm are respectively 0.10648 and 0.13454. Assuming that the entire amount of the bisphenol A residue is 1, the number of bisphenol A residues having hydroxyl terminals is 0.002075 (0.00415/2) from the area ratio of the peak (1). The number of bisphenol A residues having benzoyl terminals (indicated by "ratio of incorporated BC" in Table 1) is 0.060255 [(0.10648+0.13454)/4] from the area ratios of the peaks (3) and (4). These numbers give an end-capping rate of 96.7*%* [0.060225 x 100/(0.060225+0.002075)].

### <Themal Degradation Resistance>

On the basis of the results of the absorbance (Abs.), an absorbance less than 0.05 was evaluated as good thermal degradation resistance (G), and an absorbance of 0.05 or higher was evaluated as bad thermal degradation resistance (B).

### [Preparation of Aromatic Polyester (I)]

A reaction vessel with a stirrer was prepared and was purged with nitrogen gas. Water (4.4 liters) was then fed into the reaction vessel, and 2,2-bis(4-hydroxyphenyl)propane [bisphenol A] (346 grams,1.515 mol), sodium hydroxide (121 grams, 3.030 mol), and tetra-n-butylammonium bromide (0.977 grams, 0.003 mol) as a catalyst were subsequently added. The resultant product was sufficiently stirred for dissolution. The amount of tetra-n-butylammonium bromide used as a catalyst was 0.2 mol*%* relative to the total amount of bisphenol A.

Another vessel with a stirrer was prepared. Methylene chloride (4 liters) was fed into the vessel, and a 1:1 mixture of terephthaloyl dichloride and isophthaloyl dichloride was then added in an amount of 123 grams (0.606 mol). The resultant product was sufficiently stirred for dissolution.

The entire content in the latter vessel was fed into the former reaction vessel and was then stirred at 25°C for an hour to promote the reaction. After the termination of the reaction, the entire product in the reaction vessel was transferred to a separatory funnel, and an organic phase was separated. An equivalent volume of ion-exchanged water was added to the separated organic phase and was then stirred for 10 minutes. The solution was transferred to a separatory funnel, and the aqueous phase was removed. This procedure involving washing of the organic phase with ion-exchanged water was repeated three times, thereby obtaining 4 liters of organic phase (I). The organic phase (I) was transferred dropwise into four times in volume of methanol for precipitation of the polymer. The precipitated polymer was filtered and was then dried in a vacuum drier under reduced pressure at 120°C for 12 hours, thereby yielding 120 g of aromatic polyester (I).

### [Preparation of Aromatic Polyester (II)]

A reaction vessel with a stirrer was prepared and purged with nitrogen gas. Water (33 liters) was fed into the reaction vessel, and 2,2-bis(4-hydroxyphenyl)propane [bisphenol A] (1145.5 grams, 5.000 mol), sodium hydroxide (400.0 grams, 10.00 mol), and tetra-n-butylammonium bromide (0.366 grams, 0.001136 mol) as a catalyst were subsequently added. The resultant product was sufficiently stirred for dissolution. The amount of tetra-n-butylammonium bromide used as a catalyst was 0.023 mol% relative to the total amount of bisphenol A.

Another vessel with a stirrer was prepared. Methylene chloride (30 liters) was fed into the vessel, and a 1:1 mixture of terephthaloyl dichloride and isophthaloyl dichloride was then added in an amount of 922.76 g (4.546 mol) along with benzoyl chloride (77.0 grams, 0.548 mol, 12 mol% relative to the total fed amount of terephthaloyl dichloride and isophthaloyl dichloride). The resultant product was sufficiently stirred and then dissolved.

The entire content in the latter vessel was fed into the former reaction vessel and was then stirred at 25°C for an hour to promote the reaction. After the termination of the reaction, the organic phase was separated from the entire solution in the reaction vessel. The separated organic phase was returned into a vessel in which an aqueous phase had been removed. An equivalent volume of ion-exchanged water was added to the separated organic phase and was then stirred for 10 minutes. The aqueous phase was then removed. This procedure involving washing of the organic phase with ion-exchanged water was repeated three times, thereby yielding 30 liters of organic phase (II). The organic phase (II) was added dropwise into methanol (100 liters) to precipitate the polymer. The precipitated polymer was filtered and was then dried in a vacuum drier under reduced pressure at 120°C for 12 hours, thereby producing 1,200 g of aromatic polyester (II).

### (Example 1)

Water (200 milliliters) was fed into a 500 mL recovery flask equipped with a stirrer. Sodium hydroxide (0.78 grams, 19.5 millimol) and tetra-n-butylammonium bromide (0.049 grams, 0.15 millimol) were fed, and the solution was sufficiently stirred for dissolution.

Methylene chloride (200 milliliters) was fed into another vessel with a stirrer, and 12 grams of aromatic polyester (I) and benzoyl chloride (0.426 grams, 3 millimol, 5 mol% relative to 0.0606 mol in total of fed terephthaloyl dichloride and isophthaloyl dichloride needed in 1/10 scale preparation of the aromatic polyester (I)) were added. The resultant product was sufficiently stirred for dissolution.

The entire content in the latter vessel was fed into the former recovery flask and was then stirred at 25°C for an hour to promote the reaction. The same subsequent procedures as used in the preparation of the aromatic polyester (I) were repeated, thereby preparing an aromatic polyester.

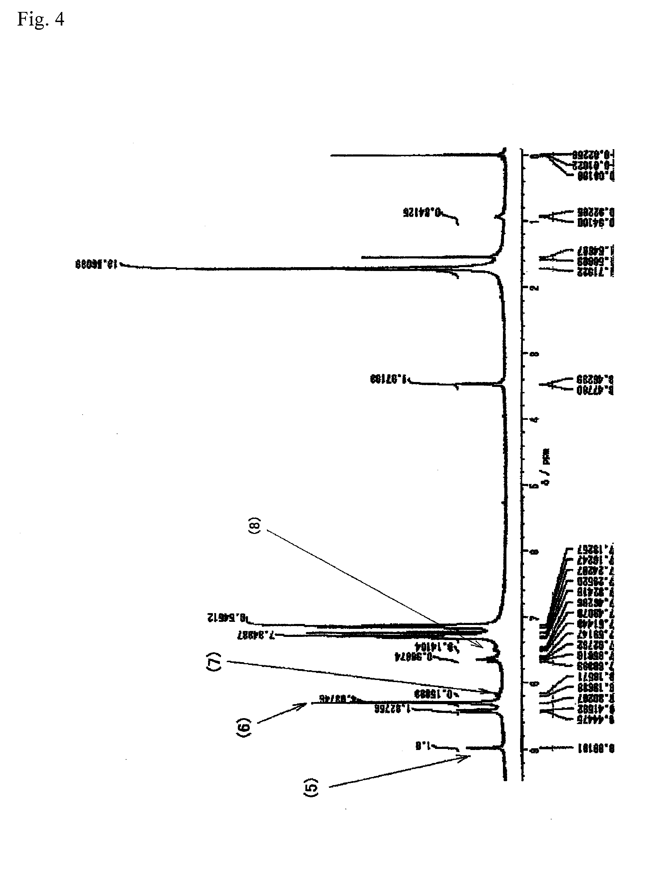

Fig. 4 illustrates a ¹H-NMR spectrum of the aromatic polyester. FT-NMR system JNM-EX270 (trade mark) manufactured by JEOL Ltd. was used. Absorption peaks (7) and (8) {4-H around 7 ppm [protons at the p-position (4-position) to the ester group] (unrecognizable in Fig. 4 because of overlapped peaks), 3-H and 5-H around 7.51 ppm [protons at the m-position (3,5-position) to the ester group], and 2-H and 6-H around 8.17 ppm [protons at the o-position (2,6-position) to the ester group] }derived from hydrogen atoms of incorporated benzoyl groups were found in the ¹H-NMR spectrum of Fig. 4. In this manner, it was confirmed that the terminals of the prepared aromatic polyester were capped with benzoyl chloride.

### (Example 2)

An aromatic polyester was prepared as in Example 1 except that the amount of benzoyl chloride was changed to 0.639 grams [4.5 millimol, 7.5 mol% relative to 0.0606 mol in total of fed terephthaloyl dichloride and isophthaloyl dichloride needed in 1/10-scale preparation of the aromatic polyester (I)].

### (Example 3)

An aromatic polyester was prepared as in Example 1 except that the amount of benzoyl chloride was changed to 0.852 grams [6.0 millimol, 10.0 mol% relative to 0.0606 mol in total of fed terephthaloyl dichloride and isophthaloyl dichloride needed in 1/10-scale preparation of the aromatic polyester (I)].

### (Example 4)

An aromatic polyester was prepared as in Example 1 except that the amount of benzoyl chloride was changed to 1.064 grams [7.5 millimol, 12.5 mol% relative to 0.0606 mol in total of fed terephthaloyl dichloride and isophthaloyl dichloride needed in 1/10-scale preparation of the aromatic polyester (I)].

### (Comparative Example 1)

An aromatic polyester was prepared as in Example 1 except that benzoyl chloride was not used [0 mol% relative to 0.0606 mol in total of fed terephthaloyl dichloride and isophthaloyl dichloride needed in 1/10-sclae preparation of the aromatic polyester (I)].

### (Comparative Example 2)

An aromatic polyester was prepared as in Example 1 except that the amount of benzoyl chloride was changed to 0.213 grams [1.5 millimol, 2.5 mol% relative to 0.0606 mol in total of fed terephthaloyl dichloride and isophthaloyl dichloride needed in 1/10-scale preparation of the aromatic polyester (I)].

### (Example 5)

Water (200 milliliters) was fed into a 500 mL recovery flask equipped with a stirrer. Sodium hydroxide (0.78 grams 19.5 millimol) and tetra-n-butylammonium bromide (0.049 grams, 0.15 millimol) were fed, and the resultant product was sufficiently stirred for dissolution.

The aromatic polyester (II) (12 grams) and benzoyl chloride [0.213 grams, 1.5 millimol, 3.3 mol% relative to 0.04546 mol in total of fed terephthaloyl dichloride and isophthaloyl dichloride needed in 1/100-scale preparation of the aromatic polyester (II)] were fed into another vessel with a stirrer. The resultant product was sufficiently stirred for dissolution.

The entire content in the latter vessel was fed into the former recovery flask and was then stirred at 25°C for an hour to promote the reaction. The same subsequent procedures as used in the preparation of the aromatic polyester (I) were repeated, thereby producing an aromatic polyester.

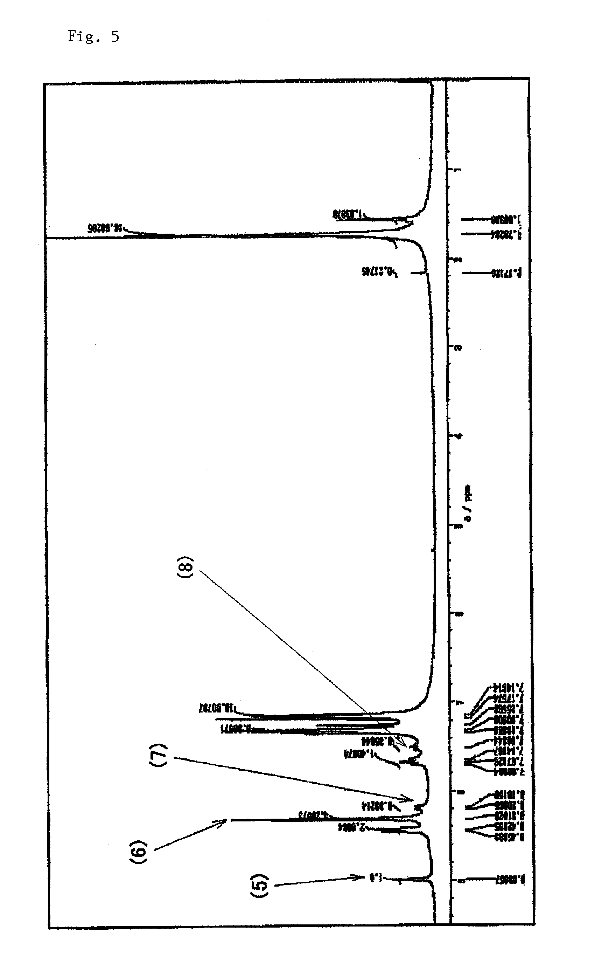

Fig. 5 illustrates a ¹H-NMR spectrum of the aromatic polyester. FT-NMR system JNM-EX270 (trade mark) manufactured by JEOL Ltd. was used. Absorption peaks (7) and (8) {4-H around 7 ppm [protons at the p-position (4-position) to the ester group] (unrecognizable in Fig. 5 because of overlapped peaks), 3-H and 5-H around 7.51 ppm [protons at the m-position (3,5-position) to the ester group], and 2-H and 6-H around 8.17 ppm [protons at the o-position (2,6-position) to the ester group]} derived from hydrogen atoms of incorporated benzoyl groups were found in the ¹H-NMR spectrum of Fig. 5. In this manner, it was confirmed that the terminals of the prepared aromatic polyester were capped with benzoyl chloride.

### (Example 6)

An aromatic polyester was prepared as in Example 5 except that the amount of benzoyl chloride was changed to 0.426 grams [3 millimol, 6.6 mol% relative to 0.04546 mol in total of fed terephthaloyl dichloride and isophthaloyl dichloride needed in 1/100-scale preparation of the aromatic polyester (II)].

### (Example 7)

An aromatic polyester was prepared as in Example 5 except that the amount of benzoyl chloride was changed to 0.639 grams [4.5 millimol, 9.9 mol% relative to 0.04546 mol in total of fed terephthaloyl dichloride and isophthaloyl dichloride needed in 1/100-scale preparation of the aromatic polyester (II)].

### (Example 8)

An aromatic polyester was prepared as in Example 5 except that the amount of benzoyl chloride was changed to 0.852 grams [6.0 millimol, 13.2 mol% relative to 0.04546 mol in total of fed terephthaloyl dichloride and isophthaloyl dichloride needed in 1/100-scale preparation of the aromatic polyester (II)].

### (Example 9)

An aromatic polyester was prepared as in Example 5 except that the amount of benzoyl chloride was changed to 1.064 grams [7.5 millimol, 16.5 mol% relative to 0.04546 mol in total of fed terephthaloyl dichloride and isophthaloyl dichloride needed in 1/100-scale preparation of the aromatic polyester (II)].

### (Comparative Example 3)

An aromatic polyester was prepared as in Example 5 except that benzoyl chloride was not added [0 mol% relative to 0.04546 mol in total of fed terephthaloyl dichloride and isophthaloyl dichloride needed in 1/100-scale preparation of the aromatic polyester (II)].

### (Comparative Example 4)

An aromatic polyester was prepared as in Example 5 except that the amount of benzoyl chloride was changed to 0.021 grams [0.15 millimol, 0.33 mol% relative to 0.04546 mol in total of fed terephthaloyl dichloride and isophthaloyl dichloride needed in 1/100-scale preparation of the aromatic polyester (II)].

### (Comparative Example 5)

An aromatic polyester was prepared as in the preparation of the aromatic polyester (I) except that the amounts of fed bisphenol A, sodium hydride, and tetra-n-butylammonium bromide, respectively, were changed to 37.67 grams (0.165 mol), 14.0 grams (0.35 mol), and 0.01209 grams (0.0375 millimol) and that benzoyl chloride (4.22 grams, 0.03 mol, 20 mol% relative to the total of fed terephthaloyl dichloride and isophthaloyl dichloride) was fed into another vessel, in addition to a 1:1 mixture of terephthaloyl dichloride and isophthaloyl dichloride (30.46 grams, 0.15 mol).

After the termination of the reaction, the entire content in the reaction vessel was transferred to a separatory funnel, and the organic phase was separated. An equivalent volume of ion-exchanged water was added to the separated organic phase and was then stirred for 10 minutes. The solution was transferred to a separatory funnel, and the aqueous phase was removed. This procedure involving washing of the organic phase with ion-exchanged water was repeated three times, thereby obtaining 1 liters of organic phase (III). The organic phase (III) was transferred dropwise into four times in volume of methanol for precipitation of the polymer. The precipitated polymer was filtered and was then dried in a vacuum drier under reduced pressure at 120°C for 12 hours, thereby yielding 37.9 grams of aromatic polyester (III). The aromatic polyester (III) has a weight average molecular weight Mw of 6,700 and a number average molecular weight Mn of 3,400.

The weight average molecular weight (Mw), the absorbance (Abs. at 400 nm), the ratio of incorporated benzoyl chloride (BC), the end-capping ratio of polyester (%) (abbreviated to "end-capping rate" in Table 1), the melt flow rate (MFR, g/10 min), and the thermal degradation resistance of the aromatic polyesters prepared in Examples 1 to 9 and Comparative Examples 1 to 5 were determined. The results are listed in Table 1.

**[Table 1]**

| | Bis-A (mol%) | FC (mol%) | Step (i) BC amount (mol%) | Step (ii) BC amount (mol%) | Weight Average Molecular Weight (Mw) | Abs (at 400nm) | Ratio of Incorporated BC | End-capping Rate (%) | MFR (g/10min) | Thermal Degradation Resistance |
|---|---|---|---|---|---|---|---|---|---|---|
| Example 1 | 250 | 100 | 0 | 5.0 | 53,000 | 0.01918 | 0.060255 | 96.7 | 19.02 | G |
| Example 2 | 250 | 100 | 0 | 7.5 | 50,000 | 0.01434 | 0.052063 | 93.8 | 50.18 | G |
| Example 3 | 250 | 100 | 0 | 10 | 50,000 | 0.02018 | 0.053805 | 95.7 | 66.11 | G |
| Example 4 | 250 | 100 | 0 | 12.5 | 52,000 | 0.04403 | 0.05536 | 92.7 | 76.88 | G |
| Example 5 | 110 | 100 | 12 | 3.3 | 29,000 | 0.02318 | 0.10721 | 99.9 | 9.53 | G |
| Example 6 | 110 | 100 | 12 | 6.6 | 29,000 | 0.01612 | 0.11298 | 99.9 | 9.75 | G |
| Example 7 | 110 | 100 | 12 | 9.9 | 29,000 | 0.02354 | 0.11439 | 99.8 | 9.60 | G |
| Example 8 | 110 | 100 | 12 | 13.2 | 29,000 | 0.01379 | 0.11601 | 99.9 | 11.02 | G |
| Example 9 | 110 | 100 | 12 | 16.5 | 28,000 | 0.01494 | 0.11782 | 99.9 | 15.95 | G |
| Comparative Example 1 | 250 | 100 | 0 | 0 | 46,000 | 0.18971 | 0 | 0 | 10.03 | B |
| Comparative Example 2 | 250 | 100 | 0 | 2.5 | 50,000 | 0.21621 | 0.04872 | 85.3 | 36.34 | B |
| Comparative Example 3 | 110 | 100 | 12 | 0 | 29,000 | 0.1118 | 0.08854 | 80.4 | 5.43 | B |
| Comparative Example 4 | 110 | 100 | 12 | 0.33 | 29,000 | 0.18175 | 0.08342 | 83.4 | 5.60 | B |
| Comparative Example 5 | 110 | 100 | 20 | - | 6,700 | 0.08408 | 0.08431 | 98.8 | Not measured | B |

In Table 1, "Bis-A" indicates bisphenol A, "FC" indicates both of terephthaloyl dichloride and isophthaloyl dichloride (1:1 mixture), and "BC" indicates benzoyl chloride. Mol% in each item was calculated as a ratio to 100 mol% FC. In Examples 1 to 4 and Comparative Examples 1 and 2, the MFR values were determined under conditions of 320°C and a load of 10.0 kg. In Examples 5 to 9 and Comparative Examples 3 and 4, since the MFR values were significantly high and were not determined under the conditions of 320°C and a load of 10.0 kg, the MFR values were determined under conditions of 260°C and a load of 10.0 kg. In Comparative Example 5, a single-step reaction was performed. In Comparative Example 5, the MFR value was significantly high due to a significantly low weight average molecular weight, and the MFR was not able to be measured even under conditions of 260°C and a load of 10.0 kg.

In Examples 1 to 4, benzoyl chloride was not added in step (i), and the amount of benzoyl chloride fed in step (ii) was changed within the scope of the present invention. The resultant aromatic polyesters had high end-capping ratios. Satisfactory absorbance and high thermal degradation resistance were exhibited, which indicated that coloration after thermal processing was significantly reduced. In addition, satisfactory MFR values were also exhibited.

In Comparative Example 1, benzoyl chloride was not added in steps (i) and (ii). In Comparative Example 2, benzoyl chloride was not added in step (i) and was added in an amount below the scope of the invention in step (ii). Each of Comparative Examples exhibited significantly unsatisfactory absorbance and insufficient thermal degradation resistance, which indicated obvious coloration after thermal processing.

In Examples 5 to 9, benzoyl chloride was added in step (i) within the scope of the present invention, and the amount of benzoyl chloride fed in step (ii) was changed within the scope of the present invention. The resultant aromatic polyesters had high end-capping ratios. Each exhibited satisfactory absorbance and high thermal degradation resistance, which indicated that coloration after thermal processing was significantly reduced. In addition, satisfactory MFR values were also exhibited.

In Comparative Example 3, benzoyl chloride was not added in step (ii). In Comparative Example 4, benzoyl chloride was added in an amount below the scope of the invention in step (ii). Each of Comparative Examples exhibited significantly unsatisfactory absorbance and insufficient thermal degradation resistance, indicating obvious coloration after thermal processing. The results demonstrate that the aromatic polyester of the present invention cannot be prepared unless benzoyl chloride is used in a predetermined amount or higher for reaction even in a two-step reaction. In Comparative Example 5, the aromatic polyester was prepared through a single-step reaction. Even though the amount of fed benzoyl chloride was increased in a single-step reaction, the weight average molecular weight of the resultant aromatic polyester was low, and the aromatic polyester of the present invention was not able to be prepared. This result indicates that the aromatic polyester disclosed in Patent Literature 3 does not have characteristics similar to those of the aromatic polyester of the present invention, such as high molecular weight, high end capping-rate, and significantly slight coloration after thermal processing.

### (Example 10)

A reaction vessel with a stirrer was prepared and was purged with nitrogen gas. Water (1.1 liters) was then fed into the reaction vessel, and 2,2-bis(4-hydroxyphenyl)propane[bisphenol A] (37.67 grams, 0.165 mol), sodium hydroxide (14.0 grams, 0.35 mol), and tetra-n-butylammonium bromide (24.18 milligrams, 0.075 millimol) as a catalyst were subsequently added. The resultant product was sufficiently stirred for dissolution. The amount of tetra-n-butylammonium bromide used as a catalyst was 0.05 mol% relative to the total amount of bisphenol A.

Another vessel with a stirrer was prepared. Methylene chloride (1 liter) was fed into the vessel, and a 1:1 mixture of terephthaloyl dichloride (15.23 grams, 0.075 mol) and isophthaloyl dichloride (15.23 grams, 0.075 mol) and 1-naphthoyl chloride (8.58 grams, 0.045 mol, 30.0 mol% relative to 0.15 mol of the total amount of fed terephthaloyl dichloride and isophthaloyl dichloride) were then added. The resultant product was sufficiently stirred for dissolution.

The entire content in the latter vessel was then added dropwise into the former vessel over five minutes, and the resultant product was stirred at 25°C for 30 minutes to promote the reaction. After the termination of the reaction [reaction of step (i)], the organic phase was separated from the entire content in the reaction vessel. The separated organic phase was washed with water (300 milliliters) three times. The organic phase was then transferred dropwise into a mixed solvent of methanol (4 liters) and water (250 milliliters) while being stirred for precipitation of the polymer. The precipitated polymer was filtered and was then dried in a vacuum drier under reduced pressure at 120°C for 12 hours, thereby giving an aromatic polyester of 57.7 gram (yield 97%).

Water (110 milliliters) and sodium hydroxide (1.4 grams, 0.035 mol) were fed into a reaction vessel with a stirrer. Aside from this, the aromatic polyester (6 grams) was dissolved into methylene chloride (90 milliliters), and the solution was fed into the vessel. Tetra-n-butylammonium bromide (7.3 milligrams, 0.02 millimol) was then added, and the resultant solution was stirred for five minutes for dissolution. To the solution, another solution, which had been prepared as a result of dissolving 1-naphthoyl chloride (0.86 grams, 4.5 millimol, 30.0 mol% relative to 0.15 mol in the total of fed terephthaloyl dichloride and isophthaloyl dichloride) into methylene chloride (20 milliliters), was added dropwise for a minute. The resultant solution was stirred for an hour to continuously promote the reaction. After the termination of the reaction [reaction of step (ii)], the organic phase was separated from the entire content in the reaction vessel. The separated organic phase was washed with water (50 milliliters) three times. The organic phase was then transferred dropwise into a mixed solvent of methanol (400 liters) and water (25 milliliters) while being stirred for precipitation of the polymer. The precipitated polymer was filtered and was then dried in a vacuum drier under reduced pressure at 120°C for 12 hours, thereby yielding an aromatic polyester (5.69 grams).

The resultant aromatic polyester had a weight average molecular weight of 40,000 and an end-capping rate of 99.6%. The MFR value was determined under conditions of 260°C and a load of 10.0 kg and marked a good result of 1.26 g/10min. The MFR values were significantly high and were not determined under the conditions of 320°C and a load of 10.0 kg.

### (Example 11)

An aromatic polyester was prepared as in Example 10 except that the amount of tetra-n-butylammonium bromide used in the reaction of step (i) was changed to 14.51 milligrams (0.045 millimol) from 24.18 milligrams (0.75 millimol). The resultant aromatic polyester had a weight average molecular weight of 24,000 and an end-capping rate of 99.3%. The MFR value was determined under conditions of 260°C and a load of 10.0 kg and marked a good result of 22.4 g/10min. The MFR values were significantly high and were not determined under the conditions of 320°C and a load of 10.0 kg.

In Examples 10 and 11, the end-capping rates of the aromatic polyesters were analyzed as follows. An FT-NMR system JNM-ECA500 (trade mark) manufactured by JEOL Ltd. was used for analysis of the end-capping rate of the polyesters. The end-capping rate of the polyester was calculated from a peak (11) (around 7.95 ppm) of one of two protons of a 1-naphthoyl chloride residue which is contained in the bisphenol A residue and is positioned at a terminal of the aromatic polyester ( protons at the 5-position to an ester group) and a peak (12) (around 8.13 ppm) of the other of the two protons (a proton at the 4-position to the ester group), and a peak (13) (around 6.73 ppm) of two protons which are at the ortho position to a hydroxyl group that is contained in the bisphenol A residue and is positioned at a terminal of the aromatic polyester. The peak (13) is an indicator of the entire bisphenol A residue contained in the aromatic polyester, and the peaks (11) and (12) are indicators of a bisphenol A residue contained in the aromatic polyester and having a 1-naphthoyl chloride residue terminal. The end-capping rate of the polyester was obtained by dividing the sum of the area ratios of the peaks (11) and (12) by the sum of the area ratios of the peaks (11), (12), and (13) and was expressed in percentage.

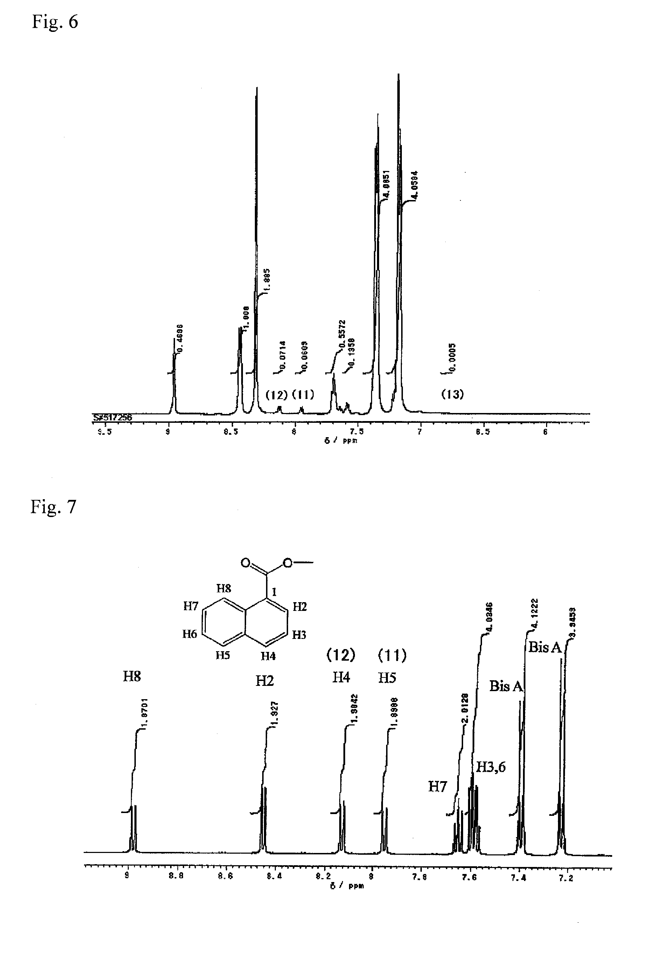

Fig. 6 illustrates an NMR spectrum of the aromatic polyester prepared in Example 10. The area ratio of the peak (11) around 7.95 ppm is 0.0609, the area ratio of the peak (12) around 8.13 ppm is 0.0714, and the area ratio of the peak (13) around 6.73 ppm is 0.0005. Assuming that the entire amount of the bisphenol A residue is 1, the number of bisphenol A residues having hydroxyl terminals is 0.00025 (0.0005/2) from the area ratio of the peak (13). Meanwhile, the number of bisphenol A residues having 1-naphthoyl chloride terminals is 0.06615 [(0.0609+0.0714)/2] from the area ratios of the peaks (11) and (12). These numbers give an end-capping rate of 99.6% [0.06615 x 100/(0.06615+0.00025)].

A compound was prepared as a result of end-capping two hydroxyl groups at the both terminals of 2,2-bis(4-hydroxyphenyl)propane[bisphenol A] with 1-naphthoyl chloride, and assignment of the peaks in the analysis of an end-capping rate in Examples 10 and 11 was determined from NMR analysis of the prepared compound. An FT-NMR system JNM-ECA500 (trade mark) manufactured by JEOL Ltd. was used also in this case. Fig. 7 illustrates an NMR spectrum and assignment of peaks in that compound.

### Industrial Applicability

The aromatic polyester of the present invention has thermal resistance, is free from coloration during being processed, and has significantly satisfactory optical properties and high flowability. The aromatic polyester is accordingly useful for optical applications such as optical fibers, lenses, optical devices, and display substrates. In addition, the aromatic polyester can be applied to materials for which thermal resistance is especially demanded, such as automobile components and electronic precise components.

### Explanation of reference numerals in the drawings

1: Peak of two protons at the ortho position to a hydroxyl group that is contained in a bisphenol A residue
2: Peak of methyl protons of the bisphenol A residue
3: Peak of two protons of a benzoyl chloride residue which is contained in the bisphenol A residue [protons at the m-position (3- or 5-position) to an ester group]
4: Peak of two protons of the benzoyl chloride residue which is contained in the bisphenol A residue [protons at the o-position (2- or 6-position) to the ester group]
5: Peak of isophthaloyl dichloride
6: Peak of terephthaloyl dichloride
7: Peak of benzoyl chloride
8: Peak of benzoyl chloride
11: Peak of a proton of a 1-naphthoyl chloride residue which is contained in the bisphenol A residue and is positioned at a terminal of the aromatic polyester [a proton at the 5-position to the ester group]
12: Peak of a proton of a 1-naphthoyl chloride residue which is contained in the bisphenol A residue and is positioned at a terminal of the aromatic polyester (a proton at the 4-position to an ester group)
13: Peak of two protons which are at an ortho position to hydroxyl groups contained in the bisphenol A residue

## Claims

1. An aromatic polyester comprising a polyhydric phenol residue and a residue of any one of aromatic polycarboxylic acid, halide thereof, and anhydride thereof, wherein terminals of the aromatic polyester have a structure represented by Formula (I):
- C (O) - R (I)
wherein R represents any one of an aliphatic group, an alicyclic group, a monocyclic aromatic group, a polycyclic aromatic group, a fused aromatic group, a heterocyclic group, and a combination of these groups, at least one hydrogen atom of these groups being optionally substituted with any one of fluorine, chlorine, bromine, iodine, an alkoxyl group, a mercapto group, a sulfenato group, a sulfinato group, a sulfo group, an alkoxycarbonyl group, an acyl group, an alkoxysulfinyl group, an alkylthiocarbonyl group, a thiosulfo group, a cyano group, a thiocyano group, an isocyano group, an isocyanato group, an isothiocyanato group, and a nitro group,
the end-capping rate of the polyester is at least 90%, and the aromatic polyester has a weight average molecular weight (Mw) of 3,000 to 1,000,000.

2. The aromatic polyester according to Claim 1, wherein the end-capping rate of the polyester is at least 95%.

3. The aromatic polyester according to Claim 1, wherein the end-capping rate of the polyester is at least 99%.

4. The aromatic polyester according to any one of Claims 1 to 3, wherein R in Formula (I) represents any one of a monocyclic aromatic group, a polycyclic aromatic group, a fused aromatic group, and a heterocyclic group, at least one hydrogen atom of these groups being optionally substituted with any one of fluorine, chlorine, bromine, iodine, and an alkoxyl group.

5. The aromatic polyester according to any one of Claims 1 to 3, wherein R in Formula (I) represents any one of a phenyl group, a naphthyl group, an anthranyl group, and a phenanthryl group, at least one hydrogen atom of these groups being optionally substituted with any one of fluorine, chlorine, and a methoxyl group.

6. The aromatic polyester according to any one of Claims 1 to 3, wherein R in Formula (I) represents any one of a phenyl group and a naphthyl group.

7. The aromatic polyester according to any one of Claims 1 to 3, wherein R in Formula (I) represents a phenyl group.

8. The aromatic polyester according to any one of Claims 1 to 7, wherein the polyester has a weight average molecular weight (Mw) of 20,000 to 100,000.

9. The aromatic polyester according to any one of Claims 1 to 7, wherein the polyester has a weight average molecular weight (Mw) of 25,000 to 80,000.

10. The aromatic polyester according to any one of Claims 1 to 7, wherein the polyester has a weight average molecular weight (Mw) of 25,000 to 60,000.

11. The aromatic polyester according to any one of Claims 1 to 10, wherein a melt flow rate (MFR, unit: g/10min, and measurement conditions: 320°C and a load of 10.0 kg) is at least 15.0.

12. The aromatic polyester according to any one of Claims 1 to 10, wherein a melt flow rate (MFR, unit: g/10min, and measurement conditions: 320°C and a load of 10.0 kg) is at least 50.0.

13. The aromatic polyester according to any one of Claims 1 to 12, wherein the polyhydric phenol is bisphenol A, and any one of the aromatic polycarboxylic acid, halide thereof, and anhydride thereof is terephthaloyl dichloride and/or isophthaloyl dichloride.

14. The aromatic polyester according to any one of Claims 1 to 13, the aromatic polyester is used for optical applications.

15. A method of preparing an aromatic polyester by a reaction of polyhydric phenol with any one of aromatic polycarboxylic acid, halide thereof, and anhydride thereof, the method comprising the steps of:
(i) adding a compound represented by Formula (II):
X ― C (O) ― R (II)
wherein, X represents any one of chlorine, bromine, and iodine, and R represents any one of an aliphatic group, an alicyclic group, a monocyclic aromatic group, a polycyclic aromatic group, a fused aromatic group, a heterocyclic group, and a combination of these groups, at least one hydrogen atom of these groups being optionally substituted with any one of fluorine, chlorine, bromine, iodine, an alkoxyl group, a mercapto group, a sulfenato group, a sulfinato group, a sulfo group, an alkoxycarbonyl group, an acyl group, an alkoxysulfinyl group, an alkylthiocarbonyl group, a thiosulfo group, a cyano group, a thiocyano group, an isocyano group, an isocyanato group, an isothiocyanato group, and a nitro group,
in an amount of 0 to 40 mol% relative to the total fed amount of any one of the aromatic polycarboxylic acid, halide thereof, and anhydride thereof to promote a reaction, and
(ii) adding the compound represented by Formula (II) in an amount of 3 to 80 mol% relative to the total fed amount of any one of the aromatic polycarboxylic acid, halide thereof, and anhydride thereof in step (i) to further promote the reaction of the resultant aromatic polyester.

16. The method of preparing an aromatic polyester according to Claim 15, wherein the compound represented by Formula (II) is added in an amount of higher than 0 mol% and up to 40 mol% in step (i).

17. The method of preparing an aromatic polyester according to any one of Claims 15 and 16, wherein R in Formula (II) represents any one of a monocyclic aromatic group, a polycyclic aromatic group, a fused aromatic group, and a heterocyclic group, at least one hydrogen atom of these groups being optionally substituted with any one of fluorine, chlorine, bromine, iodine, and an alkoxyl group.

18. The method of preparing an aromatic polyester according to any one of Claims 15 and 16, wherein R in Formula (II) represents any one of a phenyl group, a naphthyl group, an anthranyl group, and a phenanthryl group, at least one hydrogen atom of these groups being optionally substituted with any one of fluorine, chlorine, and a methoxyl group.

19. The method of preparing an aromatic polyester according to any one of Claims 15 and 16, wherein R in Formula (II) represents a phenyl group.

20. The method of preparing an aromatic polyester according to any one of Claims 15 to 19, further comprising step (iii) of purifying a solution produced through the reaction in step (i), step (iii) being performed between steps (i) and (ii).

21. The method of preparing an aromatic polyester according to any one of Claims 15 to 20, wherein the polyhydric phenol is bisphenol A, and any one of the aromatic polycarboxylic acid, the halide thereof, and anhydride thereof is terephthaloyl dichloride and/or isophthaloyl dichloride.
